# EUROPÄISCHE PATENTSCHRIFT

(11) **EP 3 466 198 B1**
(45) Veröffentlichungstag und Bekanntmachung des Hinweises auf die Patenterteilung: **21.02.2024**
(21) Anmeldenummer: 17725241.8
(22) Anmeldetag: 23.05.2017
(51) Int. Cl.: H05B 6/10, H05B 6/14, H05B 6/44, B29C 65/18, B29C 65/32, B29C 73/02, B29C 73/10, B29C 70/44, B29C 70/54, B29C 73/34, B29C 35/08, B29C 65/00

(54) **INDUKTIONSHEIZVORRICHTUNG, REPARATURVERFAHREN UND VAKUUMHAUBENVORRICHTUNG**
INDUCTION HEATING DEVICE, REPAIR METHOD AND VACUUM HOOD APPARATUS
DISPOSITIF DE CHAUFFAGE PAR INDUCTION, PROCEDE DE REPARATION ET DISPOSITIF DE COUVERCLE À VIDE

(30) Priorität: 31.05.2016 DE 102016209487
(43) Veröffentlichungstag der Anmeldung: 10.04.2019
(73) Patentinhaber: Deutsches Zentrum für Luft- und Raumfahrt e.V., 51147 Köln (DE)
(72) Erfinder: KADEN, Markus, 70372 Stuttgart (DE); SCHNEIDER, Marvin, 71083 Herrenberg (DE)
(74) Vertreter: Hoeger, Stellrecht & Partner Patentanwälte mbB
(86) Internationale Anmeldenummer: PCT/EP2017/062358
(87) Internationale Veröffentlichungsnummer: WO 2017/207338

(56) Entgegenhaltungen:
- EP-A1- 2 796 265
- DE-A1-102013 111 266
- DE-A1-102014 111 358
- DE-U1-202015 100 080
- US-A- 4 287 015
- US-A- 4 975 311
- US-A- 5 316 462
- US-A1- 2001 009 313
- US-A1- 2005 183 818
- US-A1- 2012 018 089
- US-A1- 2016 082 710

## Beschreibung

Die Erfindung betrifft eine Induktionsheizvorrichtung, umfassend mindestens eine Spulenlage mit einer Spuleneinrichtung und einem Träger, an welchem die Spuleneinrichtung angeordnet ist, wobei die mindestens eine Spulenlage biegeflexibel ausgebildet ist, und wobei die mindestens eine Spulenlage in das Strukturmaterial einer Vakuumhaube eingebettet ist und die Vakuumhaube mit der mindestens einen Spulenlage biegeflexibel ausgebildet ist.

Die EP 2 796 265 A1 offenbart eine Reparaturvorrichtung durch Wärmebeaufschlagung einer Oberfläche eines Kompositmaterials.

Die US 2012/0018089 A1 offenbart eine Schmelzvorrichtung zur Herstellung eines Teils aus einem Kompositmaterial. Die Schmelzvorrichtung umfasst eine induktive flexible Membran und einen elektrisch leitenden starren Bereich.

Aus der DE 20 2011 004 357 U1 ist eine Vakuumhauben-Vorrichtung bekannt, mit einer Vakuumhaube zum gasdichten Abdecken während eines mittels Gasdruck bewirkten Verpressens einer Schicht eines auf einen festen Formkörper aufgebrachten aushärtbaren Kompositsubstrats enthaltend eine Faserstruktur und eine in die Faserstruktur eingebrachte Matrix eines aushärtbaren viskosen Füllmaterials. Die Vakuumhaube ist aus einem elastischen Kunststoffmaterial hergestellt, dessen Temperatur mittels einer elektrischen Heizeinrichtung einstellbar ist.

Aus der DE 20 2015 100 080 U1 ist eine Induktionsheizvorrichtung bekannt, umfassend einen Träger und eine Spulenvorrichtung, welche an dem Träger angeordnet ist. Die Spulenvorrichtung umfasst eine Mehrzahl von spiralförmigen Wicklungen, welche in Reihen und Spalten angeordnet sind, wobei die spiralförmigen Wicklungen so ausgebildet sind, dass bei Stromfluss der spiralförmigen Wicklungen eine Stromrichtung in benachbarten Randwicklungsabschnitten von in einer Reihe oder Spalte benachbarten spiralförmigen Wicklungen mindestens näherungsweise gleich ist.

Aus der DE 10 2013 111 266 A1 ist eine Spulenvorrichtung bekannt, umfassend mindestens eine stromtragende Hochfrequenzlitze und einen Träger für die mindestens eine Hochfrequenzlitze. Der mindestens eine Träger ist ein Maschennetz und die mindestens eine Hochfrequenzlitze ist über einen oder mehrere Haltefäden, welche an der mindestens einen Hochfrequenzlitze und Stegen des Maschennetzes anliegen, gehalten.

Aus der WO 96/39291 ist ein Verfahren zum Formen oder Verfestigen organischer Matrix-Verbundmaterialien bekannt. Bei dem Verfahren ist vorgesehen, dass das Verbundmaterial zwischen zwei Suszeptoren angeordnet wird, wobei die Suszeptoren induktiv erwärmt werden und die Wärme der Suszeptoren auf das Verbundmaterial übertragen wird. Das erwärmte Verbundmaterial wird anschließend geformt.

Aus der WO 2010/089479 A1 ist eine Vorrichtung zur Herstellung eines Werkstücks aus einem Faserverbundwerkstoff bekannt, umfassend eine induktive flexible Membran und ein elektrisch leitendes starres Teil. Die induktive flexible Membran erzeugt ein Magnetfeld, welches Wirbelströme in dem starren Teil erzeugt, welche hierdurch einen Wärmefluss erzeugen. Dieser Wärmefluss erhitzt das Werkstück mittels Wärmeleitung.

Aus der EP 2 575 410 A2 ist ein Verfahren zum induktiven Heizen bekannt, umfassend das Auswählen von mindestens zwei Induktionsspulenschaltkreisen, wobei jeder Induktionsspulenschaltkreis einen Suszeptor mit einer Curie-Temperatur einschließt. Die Induktionsspulenschaltkreise werden parallel zueinander geschaltet und mit einem AC Netzgerät in Serie geschaltet. Es wird Energie vom ersten Induktionsspulenschaltkreis zum zweiten Induktionsspulenschaltkreis verschoben, sobald der Suszeptor des ersten Induktionsspulenschaltkreises seine Curie-Temperatur erreicht.

Aus der US 6,091,063 ist ein Verfahren zur Verbesserung der thermischen Homogenität eines Werkstücks in einem Induktionsheizprozess bekannt. Das Verfahren umfasst die Anordnung des Werkstücks entlang der Mittellinie einer Magnetinduktionsspule, so dass das Werkstück der Länge nach von der Spule umwickelt wird. Elektrisch nicht leitende Ferritblöcke werden an den Enden der Spule angeordnet, um den magnetischen Fluss der Spule abzuändern, um eine gleichmäßigere Energiedichte und eine verbesserte thermische Homogenität innerhalb des Werkstücks zu erzeugen.

Aus der DE 10 2012 107 820 A1 ist ein Verfahren zur Herstellung eines Faserverbundbauteils bekannt. Bei dem Verfahren ist vorgesehen, dass ein Faserhalbzeug in ein Formwerkzeug eingebracht und das Faserhalbzeug dann mit einer Vakuumfolie vakuumdicht verschlossen wird, so dass zwischen Formwerkzeug und Vakuumfolie ein Injektionsbereich mit dem Faserhalbzeug gebildet wird. Der Injektionsbereich wird mittels einer Drucksenke evakuiert und anschließend mit einem Matrixharz injiziert, um das Faserhalbzeug in den Injektionsbereich mit dem Matrixharz zu infiltrieren.

Aus der DE 10 2013 223 284 A1 ist eine Vorrichtung zur Herstellung eines faserverstärkten Kunststoffbauteils, mit einem Umformwerkzeug, in dem ein platinenartiges, insbesondere textiles Faserhalbzeug warmumformbar ist, in dem elektrisch leitfähige Verstärkungsfasern in einem wärmeaktivierbaren Binder eingebettet sind, und mit einer Induktionsheizung, die zumindest einen Induktor zur Erzeugung eines magnetischen Wechselfelds aufweist, das in den elektrisch leitfähigen Verstärkungsfasern des Faserhalbzeugs elektrische Ströme induziert, bekannt. Der Induktor ist zumindest ein vom Umformwerkzeug separates, flächiges Einlegerteil, das zusammen mit dem Faserhalbzeug in das Umformwerkzeug einlegbar ist.

Aus der DE 10 2011 076 463 A1 ist ein Reparaturverfahren für ein Formteil aus einem Kunststoffmaterial bekannt, bei dem ein Reparaturelement aus dem Kunststoffmaterial auf einen beschädigten Bereich des Formteils aufgebracht und durch Einwirkung von Wärme mit diesem stoffschlüssig verbunden wird. Die Wärme wird mittels eines passiven Heizelements aus einem elektrisch leitenden Material erzeugt, indem das Heizelement mit einem magnetischen Wechselfeld beaufschlagt wird.

Aus der DE 10 2010 025 068 A1 ist ein Formwerkzeug für eine Herstellungsvorrichtung zum Herstellen von faserverstärkten Bauteilen mittels eines Injektionsverfahrens bekannt, wobei das Formwerkzeug eine Formoberfläche zum Formen einer Oberfläche des faserverstärkten Bauteils hat, wobei die Formoberfläche einen ersten Teilbereich und einen zweiten Teilbereich hat, und wobei das Formwerkzeug einen Injektionsbereich zum Injizieren von Matrixmaterial in an der Formoberfläche befindliches Fasermaterial durch den zweiten Teilbereich der Formoberfläche hindurch und einen Evakuierungsbereich zum Evakuieren eines durch das Formwerkzeug begrenzten Formvolumens durch den ersten Teilbereich der Formoberfläche hindurch aufweist.

Aus der US 2012/0018089 A1 ist eine Vorrichtung zur Herstellung von Teilen aus einem Verbundmaterial bekannt, umfassend eine deformierbare Membran, einen festen Teilbereich, und Mittel zur Gasabsaugung zur Herstellung eines Vakuums zwischen der Membran und dem festen Bereich. Die deformierbare Membran umfasst mindestens einen Induktor, welcher mit einem Netzgerät verbunden ist. Der feste Teilbereich ist zumindest teilweise elektrisch leitfähig.

Der Erfindung liegt die Aufgabe zugrunde, eine Induktionsheizvorrichtung der eingangs genannten Art bereitzustellen, mittels welcher sich bei kompakter Bauweise eine flächenhaft homogene Erwärmung von Werkstücken mit unterschiedlichen Geometrien erreichen lässt.

Diese Aufgabe wird bei der eingangs genannten Induktionsheizvorrichtung gemäß Anspruch 1 dadurch gelöst, dass die Vakuumhaube eine Verstärkungsstruktur aufweist, welche in das Strukturmaterial der Vakuumhaube eingebettet ist, und dass die Verstärkungsstruktur aus einer Faserstruktur hergestellt ist.

Durch das Einbetten der Spulenlage in das Strukturmaterial der Vakuumhaube bildet die Vakuumhaube mit der Spulenlage ein integrales Bauteil. Dieses integrale Bauteil ist als Ganzes biegeflexibel ausgebildet. Zwischen der Vakuumhaube und einem Werkstück ist durch Unterdruckbeaufschlagung ein Unterdruckbereich herstellbar. Durch die Druckdifferenz zwischen einem Außenraum und dem Unterdruckbereich wird die Vakuumhaube gegen das Werkstück gedrückt und es kann näherungsweise ein konstanter Abstand zwischen der Spulenlage der Vakuumhaube und dem Werkstück hergestellt werden.

Der Unterdruckbereich wird von Randbereichen der Vakuumhaube gasdicht umschlossen, wenn die Vakuumhaube an ein Werkstück angelegt ist. Die Randbereiche umgeben den Unterdruckbereich und kontaktieren gasdicht eine Oberfläche des Werkstücks.

Durch die biegeflexible Ausbildung der Vakuumhaube mit der mindestens einen Spulenlage kann die Induktionsheizvorrichtung auch auf einem Werkstück mit einer Oberfläche eingesetzt werden, welche beispielsweise gekrümmt oder abgestuft ist. Durch den Unterdruckbereich zwischen der Vakuumhaube und dem Werkstück kann ein konstanter Abstand zwischen der Spulenlage und dem Werkstück auch dann erzeugt werden, wenn das Werkstück eine gekrümmte oder abgestufte Oberfläche aufweist.

Beispielsweise ist vorgesehen, dass ein elektrisch leitfähiger Suszeptor zwischen der Oberfläche des Werkstücks und der Vakuumhaube angeordnet wird.

Der Suszeptor ist beispielsweise ein dünnes Metallblech oder Metallnetz, welches ebenfalls biegeflexibel ausgebildet ist. Es ist vorgesehen, dass der Suszeptor durch homogene magnetische Felder, welche von der Spuleneinrichtung erzeugt werden, homogen erwärmt wird. Hierdurch ist es möglich, mit der Induktionsheizvorrichtung die gekrümmte Oberfläche des Werkstücks homogen zu erwärmen.

Die mindestens eine Spulenlage ist in das Strukturmaterial der Vakuumhaube eingebettet; die mindestens eine Spulenlage ist insbesondere vollständig von dem Strukturmaterial der Vakuumhaube umgeben. Das Strukturmaterial der Vakuumhaube umschließt die mindestens eine Spulenlage insbesondere allseitig. Die mindestens eine Spulenlage ist dadurch in das Strukturmaterial der Vakuumhaube integriert. Auf diese Weise bildet die Vakuumhaube mit der mindestens einen Spulenlage ein einziges Bauteil, welches als Ganzes handhabbar ist.

Insbesondere ist die mindestens eine Spulenlage von dem Strukturmaterial der Vakuumhaube umgeben. Hierdurch kann die Spulenlage innerhalb der Vakuumhaube in einer definierten geometrischen Lage fixiert werden. Es entsteht ein integrales Bauteil aus Vakuumhaube und Spulenlage, welches eine homogene Außenfläche aufweist, welche durch das Strukturmaterial der Vakuumhaube gebildet ist.

Die mindestens eine Spulenlage ist beispielsweise durch allseitigen Formschluss mit dem Strukturmaterial der Vakuumhaube innerhalb der Vakuumhaube fixiert. Dadurch lässt sich die mindestens eine Spulenlage einfach in das Strukturmaterial der Vakuumhaube integrieren.

Ganz besonders vorteilhaft ist es, wenn die Spuleneinrichtung eine Mehrzahl von spiralförmigen Wicklungen umfasst, welche in Reihen und/oder Spalten angeordnet sind, und wobei die spiralförmigen Wicklungen insbesondere so ausgebildet sind, dass bei Stromdurchfluss der spiralförmigen Wicklungen eine Stromrichtung in benachbarten Randwicklungsabschnitten von in einer Reihe oder Spalte benachbarten spiralförmigen Wicklungen mindestens näherungsweise gleich ist. Durch die entsprechende Ausbildung der spiralförmigen Wicklungen wird dafür gesorgt, dass am Zwischenbereich zwischen benachbarten spiralförmigen Wicklungen keine gegenseitige Auslöschung von elektromagnetischen Feldern erfolgt. Durch die geometrische Anordnung von Windungen der spiralförmigen Wicklungen über entsprechende Anordnung und Ausbildung der Randwicklungsabschnitte ist dafür gesorgt, dass in diesem Zwischenbereich der Strom an benachbarten spiralförmigen Wicklungen in die gleiche Richtung fließt und dadurch eine Feldabschwächung vermieden wird. Ein Randwicklungsabschnitt ist dabei ein Abschnitt einer äußeren Windung. Beispielsweise tritt beim Vorsehen einer einzigen spiralförmigen Wicklung eine stark inhomogene Energiedichteverteilung auf. Durch das Vorsehen einer Mehrzahl von spiralförmigen Wicklungen mit der vorstehend beschriebenen Ausbildung erhält man im Betrieb bei Stromdurchfluss eine Homogenisierung der Energiedichteverteilung, wodurch wiederum eine homogene Erwärmung von Bauteilen realisierbar ist.

Bezogen auf die Fläche des Trägers, an welchem spiralförmige Wicklungen angeordnet sind, lässt sich dadurch eine homogene Erwärmung realisieren.

Die spiralförmigen Wicklungen an dem Träger bilden gewissermaßen Inseln, wobei die Inseln so gewickelt sind, dass eine Feldauslöschung im Zwischenbereich zwischen benachbarten spiralförmigen Wicklungen vermieden ist.

Grundsätzlich lässt sich die entsprechende Induktionsheizvorrichtung bezüglich der Fläche beliebig erweitern.

Bezüglich weiterer Details der Ausbildung der homogenen Feldverteilung durch die Spuleneinrichtung wird auf die DE 20 2015 100 080 U1 des gleichen Anmelders verwiesen.

Günstig ist es, wenn der Träger durch eine Faserstruktur und/oder durch eine Maschenstruktur gebildet ist, die Spuleneinrichtung über einen oder mehrere Haltefäden an dem Träger gehalten ist, und die Spuleneinrichtung insbesondere mit dem Träger vernäht ist. Durch die Faserstruktur des Trägers lässt sich auf einfache Weise eine biegeflexible Ausbildung realisieren. Über Haltefäden lässt sich die Spuleneinrichtung auf einfache Weise an dem Träger fixieren. Es lässt sich dadurch ein flexibler Träger mit flexibler Spuleneinrichtung realisieren. Durch die Vernähung der Spuleneinrichtung mit dem Träger kann die Spuleneinrichtung auf einfache Weise in einer definierten geometrischen Lage mit dem Träger verbunden werden. Es wird in diesem Zusammenhang auf die DE 10 2013 111 266 A1 des gleichen Anmelders.

Insbesondere weist die Vakuumhaube eine Unterseite auf, welche im Betrieb der Induktionsheizvorrichtung einem Werkstück zugewandt ist. Die Vakuumhaube weist eine Kanaleinrichtung mit mindestens einem Zufuhrkanal auf, wobei über eine Unterdruckbeaufschlagung des mindestens einen Zufuhrkanals ein Unterdruckbereich zwischen der Unterseite und dem Werkstück herstellbar ist und/oder das Werkstück über den mindestens einen Zufuhrkanal mit einem Material infiltrierbar ist. Es ist dadurch möglich, durch fluidwirksames Verbinden des Zufuhrkanals mit einer Vorrichtung zur Unterdruckbeaufschlagung, wie zum Beispiel einer Pumpe, auf einfache Weise einen Unterdruckbereich zwischen der Unterseite der Vakuumhaube und dem Werkstück herzustellen. Es ist ferner möglich, das Werkstück über den mindestens einen Zufuhrkanal mit einem Material zu infiltrieren. Beispielsweise ist es vorgesehen, dass das Werkstück über den mindestens einen Zufuhrkanal im Betrieb der Induktionsheizvorrichtung mit einem Reparaturmaterial, wie zum Beispiel einem Harz infiltriert wird.

Es ist dann günstig, wenn die Vakuumhaube mindestens einen Anschluss aufweist, welcher mit dem mindestens einen Zufuhrkanal fluidwirksam verbunden ist. Hierdurch kann auf einfache Weise eine fluidwirksame Verbindung einer Vorrichtung zur Unterdruckbeaufschlagung und/oder einer Vorrichtung zur Zuführung eines Materials mit dem mindestens einen Zufuhrkanal hergestellt werden.

Es kann vorgesehen sein, dass die Vakuumhaube mindestens einen Verteiler aufweist, und der mindestens eine Zufuhrkanal insbesondere in den mindestens einen Verteiler mündet. Dies ermöglicht es, auf einfache Weise eine fluidwirksame Verbindung zwischen einer Kanalstruktur, welche beispielsweise an der Unterseite der Vakuumhaube angeordnet ist, und dem mindestens einen Verteiler beziehungsweise dem mindestens einen Zufuhrkanal herzustellen.

Es ist günstig, wenn die Kanaleinrichtung eine Kanalstruktur mit mindestens einem Kanal an der Unterseite der Vakuumhaube umfasst, welcher mit einer Öffnung zu der Unterseite hin offen ist und welcher insbesondere mit dem mindestens einen Zufuhrkanal fluidwirksam verbunden ist. Die Unterdruckbeaufschlagung zwischen der Unterseite der Vakuumhaube und dem Werkstück kann dann über den mindestens einen Kanal der Kanalstruktur erfolgen. Hierdurch kann die Unterdruckbeaufschlagung über eine große Oberfläche an der Unterseite der Vakuumhaube durchgeführt werden. Es wird ferner ermöglicht, das Werkstück über den mindestens einen Kanal der Kanalstruktur an der Unterseite mit einem Material zu infiltrieren. Hierdurch kann die Infiltration des Werkstücks über eine große Oberfläche erfolgen.

Insbesondere beträgt eine Summe von Querschnittsflächen der Öffnungen aller Kanäle der Kanalstruktur an der Unterseite mindestens 30 % der Gesamtfläche der Unterseite. Hierdurch kann die Unterdruckbeaufschlagung über einen großen Flächenanteil der Gesamtfläche der Unterseite durchgeführt werden. Auf diese Weise kann eine effektive Unterdruckbeaufschlagung zwischen der Unterseite der Vakuumhaube und dem Werkstück durchgeführt werden.

Es ist günstig, wenn die Kanäle der Kanalstruktur gleichmäßig über die Unterseite angeordnet sind. Dies ermöglicht es, die Unterdruckbeaufschlagung gleichmäßig an der Unterseite der Vakuumhaube durchzuführen. Insbesondere beträgt in einem Flächenbereich der Unterseite, welcher 25 % der Gesamtfläche der Unterseite umfasst, die Summe der Querschnittsflächen der Öffnungen der Kanäle der Kanalstruktur, welche innerhalb des Flächenbereichs liegen, mindestens 10 % und höchstens 40 % der Summe der Querschnittsflächen der Öffnungen aller Kanäle der Kanalstruktur. Auf diese Weise kann eine gleichmäßige Anordnung der Kanalstruktur an der Unterseite der Vakuumhaube realisiert werden.

Insbesondere beträgt in einem Flächenbereich der Unterseite, welcher 25 % der Gesamtfläche der Unterseite umfasst, die Summe der Querschnittsflächen der Öffnungen der Kanäle der Kanalstruktur, welche innerhalb des Flächenbereichs liegen, mindestens 15 % und höchstens 35 % der Summe der Querschnittsflächen der Öffnungen aller Kanäle der Kanalstruktur.

Die Vakuumhaube weist eine Verstärkungsstruktur auf, welche in das Strukturmaterial der Vakuumhaube eingebettet ist und welche aus einer Faserstruktur hergestellt ist. Hierdurch kann die Formstabilität der Vakuumhaube erhöht werden, wodurch Verformungen der Vakuumhaube, wie zum Beispiel die Bildung von Falten oder Wellen, vermieden werden können. Die Vakuumhaube ist dann einfacher eben an das Werkstück anlegbar. Durch die Verwendung einer Faserstruktur kann die Verstärkungsstruktur auf einfache Weise hergestellt werden.

Bei einem Ausführungsbeispiel weist die Vakuumhaube mindestens eine thermische Isolierungslage auf, welche in das Strukturmaterial der Vakuumhaube eingebettet ist, wobei die mindestens eine Spulenlage insbesondere zwischen der mindestens einen thermischen Isolierungslage und der Unterseite der Vakuumhaube angeordnet ist. Hierdurch kann im Betrieb der Induktionsheizvorrichtung eine Wärmeabstrahlung durch eine Oberseite der Vakuumhaube, welche dem Werkstück abgewandt ist, vermieden werden. Hierdurch wird der Wirkungsgrad der Induktionsheizvorrichtung erhöht.

Insbesondere ist es vorgesehen, dass der Vakuumhaube mindestens ein Sensor zugeordnet ist. Der mindestens eine Sensor kann beispielsweise an der Unterseite der Vakuumhaube angeordnet sein. Es ist dadurch möglich, im Betrieb der Vakuumhaube Messwerte zu erfassen, welche zur Steuerung und/oder Regelung bestimmter Parameter, wie zum Beispiel Druck und/oder Temperatur, eingesetzt werden können.

Bei einem Ausführungsbeispiel umfasst die Vakuumhaube eine Fixierungseinrichtung mit mindestens einer Lasche und mindestens einer Ausnehmung. An der Fixierungseinrichtung kann die Vakuumhaube auf einfache Weise in einer bestimmten Position an einem Werkstück fixiert werden. Es kann dadurch ein Abrutschen der Vakuumhaube von dem Werkstück verhindert werden.

Es ist dann günstig, wenn die mindestens eine Lasche mit der Vakuumhaube einstückig verbunden ist. Hierdurch wird ein integrales Bauteil bestehend aus Vakuumhaube und Lasche gebildet.

Günstig ist es, wenn die Vakuumhaube aus einem gieß- und/oder spritzfähigen Strukturmaterial hergestellt ist. Hierdurch kann die Vakuumhaube auf einfache Weise im Spritzgießverfahren hergestellt werden.

Das Strukturmaterial der Vakuumhaube ist insbesondere ein Silikonmaterial. Dadurch lässt sich auf einfache Weise eine biegeflexible Ausbildung der Vakuumhaube realisieren.

Bei einem Ausführungsbeispiel ist es vorgesehen, dass mindestens eine Zusatzlage über eine Verbindungseinrichtung mit der Vakuumhaube lösbar verbunden ist und dass die mindestens eine Zusatzlage insbesondere biegeflexibel ausgebildet ist. Hierdurch kann die Vakuumhaube flexibel und auf einfache Weise um Bestandteile erweitert beziehungsweise reduziert werden. Die Ausstattung der Vakuumhaube kann flexibel an die jeweiligen Einsatzerfordernisse angepasst werden. Durch eine biegeflexible Ausbildung der Zusatzlage ist die Vakuumhaube mit der Zusatzlage biegeflexibel und kann auf gekrümmten Oberflächen eingesetzt werden.

Günstig ist es dabei, wenn die Verbindungseinrichtung mindestens einen Magneten und/oder mindestens eine Klettverbindung umfasst. Hierdurch kann auf einfache Weise eine lösbare Verbindung zwischen der mindestens einen Zusatzlage und der Vakuumhaube realisiert werden.

Die nachfolgende Beschreibung bevorzugter Ausführungsformen dient im Zusammenhang mit den Zeichnungen der näheren Erläuterung der Erfindung.

Es zeigen:
- Figur 1: eine schematische perspektivische Ansicht eines ersten Ausführungsbeispiels einer erfindungsgemäßen Induktionsheizvorrichtung;
- Figur 2: eine Schnittansicht längs der Linie 2-2 gemäß Figur 1;
- Figur 3: eine schematische Schnittansicht eines zweiten Ausführungsbeispiels einer erfindungsgemäßen Induktionsheizvorrichtung;
- Figur 4: eine schematische Schnittansicht eines dritten Ausführungsbeispiels einer erfindungsgemäßen Induktionsheizvorrichtung;
- Figur 5: eine schematische Schnittansicht eines vierten Ausführungsbeispiels einer erfindungsgemäßen Induktionsheizvorrichtung;
- Figur 6: eine schematische Schnittansicht eines fünften Ausführungsbeispiels einer erfindungsgemäßen Induktionsheizvorrichtung;
- Figur 7: eine schematische Schnittansicht eines sechsten Ausführungsbeispiels einer erfindungsgemäßen Induktionsheizvorrichtung;
- Figur 8: eine Draufsicht auf die Induktionsheizvorrichtung gemäß Figur 7;
- Figur 9a: eine Ansicht eines ersten Ausführungsbeispiels einer Kanalstruktur;
- Figur 9b: eine Schnittansicht längs der Linie 4-4 gemäß Figur 9a;
- Figur 9c: eine Ansicht eines zweiten Ausführungsbeispiels einer Kanalstruktur;
- Figur 9d: eine Schnittansicht längs der Linie 6-6 gemäß Figur 9c;
- Figur 9e: eine Ansicht eines dritten Ausführungsbeispiels einer Kanalstruktur;
- Figur 9f: eine Schnittansicht längs der Linie 8-8 gemäß Figur 9e;
- Figur 9g: eine Ansicht eines vierten Ausführungsbeispiels einer Kanalstruktur;
- Figur 9h: eine Schnittansicht längs der Linie 10'-10' gemäß Figur 9g;
- Figur 10a: eine schematische Schnittansicht eines siebten Ausführungsbeispiels einer erfindungsgemäßen Induktionsheizvorrichtung;
- Figur 10b: eine schematische Schnittansicht eines achten Ausführungsbeispiels einer erfindungsgemäßen Induktionsheizvorrichtung;
- Figur 10c: eine schematische Schnittansicht eines neunten Ausführungsbeispiels einer erfindungsgemäßen Induktionsheizvorrichtung;
- Figur 11: eine schematische Schnittansicht eines ersten Ausführungsbeispiels einer erfindungsgemäßen Vakuumhaubenvorrichtung;
- Figur 12: eine schematische Schnittansicht eines zweiten Ausführungsbeispiels einer erfindungsgemäßen Vakuumhaubenvorrichtung;
- Figur 13: eine schematische Schnittansicht eines dritten Ausführungsbeispiels einer erfindungsgemäßen Vakuumhaubenvorrichtung;
- Figur 14: eine schematische Schnittansicht eines vierten Ausführungsbeispiels einer erfindungsgemäßen Vakuumhaubenvorrichtung;
- Figur 15: eine schematische Schnittansicht eines fünften Ausführungsbeispiels einer erfindungsgemäßen Vakuumhaubenvorrichtung;
- Figur 16: eine schematische Schnittansicht eines sechsten Ausführungsbeispiels einer erfindungsgemäßen Vakuumhaubenvorrichtung;
- Figur 17: eine Draufsicht auf die Vakuumhaubenvorrichtung gemäß Figur 16;
- Figur 18a: eine Ansicht eines ersten Ausführungsbeispiels einer Kanalstruktur;
- Figur 18b: eine Schnittansicht längs der Linie 4-4 gemäß Figur 18a;
- Figur 18c: eine Ansicht eines zweiten Ausführungsbeispiels einer Kanalstruktur;
- Figur 18d: eine Schnittansicht längs der Linie 6-6 gemäß Figur 18c;
- Figur 18e: eine Ansicht eines dritten Ausführungsbeispiels einer Kanalstruktur;
- Figur 18f: eine Schnittansicht längs der Linie 8-8 gemäß Figur 18e;
- Figur 18g: eine Ansicht eines vierten Ausführungsbeispiels einer Kanalstruktur;
- Figur 18h: eine Schnittansicht längs der Linie 10'-10' gemäß Figur 18g;
- Figur 19a: eine schematische Schnittansicht eines siebten Ausführungsbeispiels einer erfindungsgemäßen Vakuumhaubenvorrichtung;
- Figur 19b: eine schematische Schnittansicht eines achten Ausführungsbeispiels einer erfindungsgemäßen Vakuumhaubenvorrichtung; und
- Figur 19c: eine schematische Schnittansicht eines neunten Ausführungsbeispiels einer erfindungsgemäßen Vakuumhaubenvorrichtung.

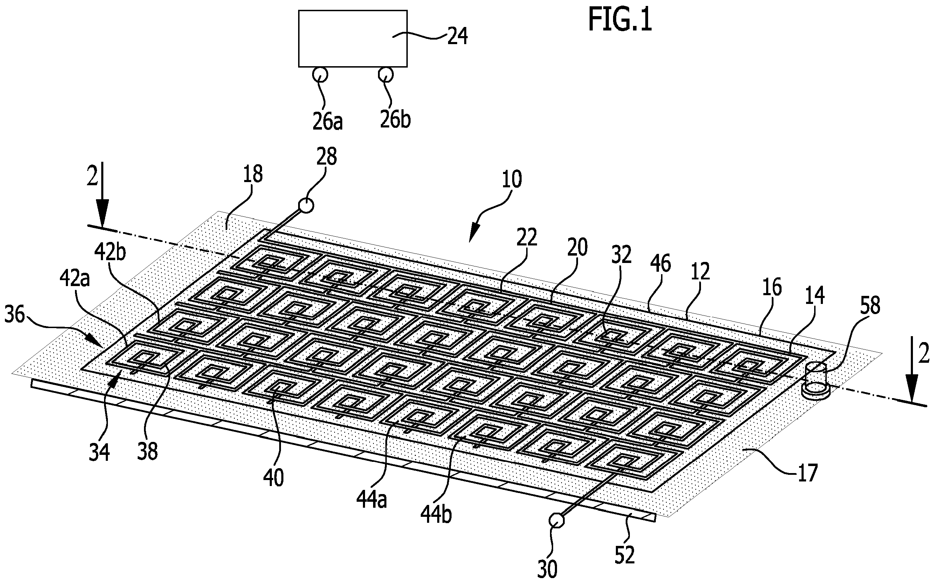

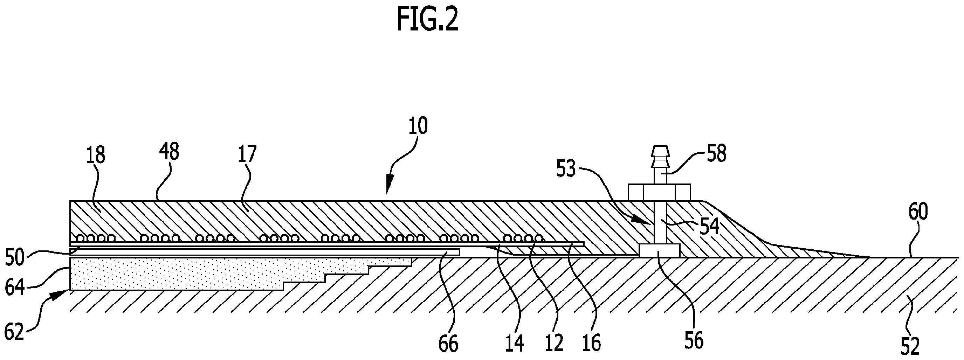

Ein erstes Ausführungsbeispiel einer erfindungsgemäßen Induktionsheizvorrichtung, welches in Figur 1 und Figur 2 schematisch dargestellt und dort mit 10 bezeichnet ist, umfasst eine Spulenlage 12 mit einer Spuleneinrichtung 14 und einem Träger 16. Die Spulenlage 12 ist in das Strukturmaterial 17 einer Vakuumhaube 18 eingebettet.

Der Träger 16 ist aus einem elektrisch isolierenden Material hergestellt. Er ist beispielsweise eine Faserstruktur und ein textiles Gebilde, wie ein Gewebe oder Gewirke.

An dem Träger 16 ist die Spuleneinrichtung 14 angeordnet. Die Spuleneinrichtung ist durch eine stromtragende Hochfrequenzlitze 20 gebildet.

Der Träger 16 mit der Spuleneinrichtung 14 ist als Ganzes biegeflexibel ausgebildet.

Die Hochfrequenzlitze 20 dient zum Tragen eines hochfrequenten Wechselstroms. Die Hochfrequenzlitze 20 ist ein Drahtbündel von Einzeldrähten, welche jeweils durch eine Isolierung gegeneinander elektrisch isoliert sind. Es lässt sich dadurch effektiv eine Vergrößerung des am Stromfluss beteiligten Querschnitts im Vergleich zu einem Volldraht erreichen, wobei der Einfluss des Skin-Effekts reduziert ist. Ferner wird die Ladungsträger-Verdrängung an eine Seite des entsprechenden Leiters durch das Magnetfeld einer darauf hergestellten Spule verringert (Proximity-Effekt).

Das Drahtbündel ist bei einer Ausführungsform in einer Umhüllung 22 angeordnet, welche insbesondere mehrlagig ist.

Bezüglich weiterer Details der Ausbildung der Hochfrequenzlitze 20 wird auf die DE 10 2013 111 266 A1 und auf die DE 20 2015 100 080 U1 des gleichen Anmelders verwiesen.

Der Spuleneinrichtung 14 ist eine Hochfrequenzquelleneinrichtung 24 (vergleiche Figur 1) zugeordnet. Die Einzeldrähte des Drahtbündels der Hochfrequenzlitze 20 sind beim Betrieb der Induktionsheizvorrichtung 10 mit entsprechenden Anschlüssen 26a, 26b der Hochfrequenzquelleneinrichtung 24 elektrisch wirksam verbunden.

Die Hochfrequenzlitze 20 weist dazu an einem ersten Ende einen Anschluss 28 und an einem zweiten Ende einen Anschluss 30 auf.

Die Hochfrequenzquelleneinrichtung 24 dient zur Erzeugung eines hochfrequenten elektromagnetischen Wechselfelds, mit welchem die Hochfrequenzlitze 20 beaufschlagt wird. Die Frequenz liegt bei mindestens 20 kHz und liegt typischerweise bei ca. 150 kHz.

Die Hochfrequenzquelleneinrichtung 24 umfasst eine elektronische Schalteinrichtung zur Erzeugung des entsprechenden Wechselfelds, wenn die primäre elektrische Quelle eine Gleichstromquelle ist.

Die Hochfrequenzlitze 20 ist insbesondere biegeflexibel ausgebildet.

Die Spuleneinrichtung 14 umfasst eine Mehrzahl von spiralförmigen Wicklungen 32. Diese spiralförmigen Wicklungen 32 sind an dem Träger 16 in Reihen 34 und Spalten 36 angeordnet. Zur Ausbildung einer Flächeninduktionsheizvorrichtung 10 sind die spiralförmigen Wicklungen 32 an dem Träger 16 gleichmäßig verteilt angeordnet. Die spiralförmigen Wicklungen 32 sind an der Hochfrequenzlitze 20 ausgebildet.

Insbesondere sind die spiralförmigen Wicklungen 32 durch die Reihen 34 und Spalten 36 an dem Träger 16 in einem zweidimensionalen Gitter angeordnet. Dieses zweidimensionale Gitter ist insbesondere ein Rechteckgitter und vorzugsweise ein Quadratgitter.

Eine jeweilige spiralförmige Wicklung 32 weist eine Mehrzahl von Windungen 38 auf, welche auf eine Ausgangsstelle 40 bezogen sind. Eine Ausgangsstelle 40 liegt auf einer Windungsachse der Windungen 38 der spiralförmigen Wicklung 32. Die Windungsachse ist senkrecht zum Träger 16 orientiert. Die Spirale einer spiralförmigen Wicklung 32 ist als Kurve definiert, welche sich von der Ausgangsstelle 40 bzw. der Windungsachse entfernt bzw. annähert. Die Entfernung kann dabei monoton zunehmend sein bzw. die Annäherung kann monoton abnehmend sein, oder sie kann abschnittsweise zunehmend bzw. abnehmend sein.

Die Anordnung der spiralförmigen Wicklungen 32 an dem Träger 16 bestimmt die Temperaturverteilung an einem zu erwärmenden Gegenstand.

Erfindungsgemäß ist die Spuleneinrichtung 14 so ausgebildet, dass über die Fläche der Spuleneinrichtung 14 eine homogene Feldverteilung erreicht wird und insbesondere im Bereich zwischen benachbarten spiralförmigen Wicklungen 32 eine "Feldauslöschung" der erzeugten magnetischen Felder vermieden wird.

Bei Stromdurchfluss einer spiralförmigen Wicklung 32 ist innerhalb einer spiralförmigen Wicklung 32 der Drehsinn des durchfließenden Stroms gleichsinnig. Erfindungsgemäß ist es vorgesehen, dass sowohl für Reihen 34 als auch für Spalten 36 der Drehsinn für den Stromfluss in benachbarten spiralförmigen Wicklungen 42a, 42b bzw. 44a, 44b entgegengerichtet ist. Dadurch lässt sich die beschriebene Auslöschung des elektromagnetischen Felds vermeiden.

Die spiralförmigen Wicklungen 32 der Spuleneinrichtung 14 sind elektrisch in Reihe geschaltet. Bei dem gezeigten Ausführungsbeispiel (Figur 1) sind die spiralförmigen Wicklungen 32 in einer Reihe 34 hintereinander seriell geschaltet. Die entsprechenden Reihen 34 sind wiederum seriell geschaltet. Bezüglich weiterer Details der Ausbildung der homogenen Feldverteilung durch die Spuleneinrichtung 14 wird auf die DE 20 2015 100 080 U1 des gleichen Anmelders verwiesen.

Der Träger 16 hat eine erste Seite 46 und eine der ersten Seite gegenüberliegende zweite Seite. Die Hochfrequenzlitze 20 ist vorzugsweise ausschließlich oder zum größten Teil an der ersten Seite 46 angeordnet.

Die entsprechenden Windungsachsen der spiralförmigen Wicklungen 32 liegen quer und insbesondere senkrecht zu dem Träger 16.

Die Hochfrequenzlitze 20 ist über einen oder mehrere Haltefäden an dem Träger 16 fixiert und insbesondere mit diesem vernäht. Durch diese Fixierung über Haltefäden wird auch die Windungsstruktur der Spuleneinrichtung 14 an dem Träger 16 hergestellt.

Bezüglich der Fixierung über Haltefäden der Spuleneinrichtung 14 an dem Träger 16 wird auf die DE 10 2013 111 266 A1 des gleichen Anmelders verwiesen.

Es können ferner äußere elektrische Isolatorlagen vorgesehen sein, zwischen welchen dann der Träger 16 mit daran fixierter Spuleneinrichtung 14 angeordnet ist. Solche äußeren elektrischen Isolierlagen sind beispielsweise aus einem Silikonmaterial hergestellt.

Die äußeren elektrischen Isolierlagen sind biegeflexibel ausgebildet.

Der Träger 16 ist biegeflexibel ausgebildet. Die Hochfrequenzlitze 20 ist mit dem Träger 16 biegbar. Die Verbindung der Hochfrequenzlitze 20 mit dem Träger 20 über Haltefäden ermöglicht die Biegbarkeit.

Die Induktionsheizvorrichtung 10 ist als Flächeninduktionsheizvorrichtung ausgebildet, bei welcher durch die Anordnung der spiralförmigen Wicklungen 32 Bereiche mit sich gegenseitig auslöschenden elektromagnetischen Feldern vermieden sind. Dadurch lässt sich bei hoher Flexibilität eine homogene Erwärmung erreichen.

Die spiralförmigen Wicklungen 32 auf dem Träger 16 bilden felderzeugende Inseln. Durch die entsprechende Ausbildung der Inseln lässt sich grundsätzlich die "Heizfläche" beliebig erweitern bzw. es lässt sich eine Größenanpassung durchführen. Dies wird dann durch entsprechende "Legung" der Hochfrequenzlitze 20 an dem Träger 16 erreicht.

Die Vakuumhaube 18 ist insbesondere aus einem Strukturmaterial 17 hergestellt, welches biegeflexibel, gasdicht und elektrisch isolierend ist. Das Strukturmaterial 17 der Vakuumhaube 18 ist beispielsweise ein Silikonmaterial.

Die Spulenlage 12 ist in das Strukturmaterial 17 der Vakuumhaube 18 eingebettet. Sie ist insbesondere vollständig vom Strukturmaterial 17 der Vakuumhaube 18 umgeben.

Das Strukturmaterial 17 der Vakuumhaube 18 liegt insbesondere formschlüssig an der ersten Seite 46 und an der der ersten Seite 46 gegenüberliegenden zweiten Seite des Trägers 16, sowie an der Spuleneinrichtung 14 an. Hierdurch wird die Spulenlage 12 innerhalb der Vakuumhaube 18 an einer festen Position fixiert.

Die Vakuumhaube 18 bildet mit der Spulenlage 12 ein integrales Bauteil. Dieses integrale Bauteil ist als Ganzes biegeflexibel ausgebildet.

Das Vorläufermaterial der Vakuumhaube 18 ist insbesondere gieß- und spritzfähig. Dies ermöglicht es, die Spulenlage 12 durch Spritzgießen in das Strukturmaterial 17 der Vakuumhaube 18 einzubetten.

Hierzu wird beispielsweise die Spulenlage 12 auf einer ersten Materiallage platziert. Anschließend wird die erste Materiallage mit der Spulenlage 12 in einer Form angeordnet und verflüssigtes Material mit einem Spritzgießwerkzeug unter Druck eingespritzt. Das verflüssigte Material umgibt die Spulenlage 12 formschlüssig und kontaktiert die erste Materiallage. Nach Erstarren des eingespritzten Materials entsteht ein stoffschlüssiger Kontakt zwischen der ersten Materiallage und dem eingespritzten Material. Die Gesamtheit des Materials bildet das Strukturmaterial 17 der Vakuumhaube 18. In das Strukturmaterial 17 ist die Spulenlage 12 eingebettet. Auf diese Weise kann die Spulenlage 12 in das Strukturmaterial 17 der Vakuumhaube 18 im Spritzgießverfahren eingebettet werden.

Die Vakuumhaube 18 weist eine Oberseite 48 und eine Unterseite 50 auf. Im Betrieb der Induktionsheizvorrichtung 10 ist die Unterseite 50 einem Werkstück 52 zugewandt und die Oberseite 48 dem Werkstück 52 abgewandt.

Der Träger 16 der Spuleneinrichtung 14 liegt zwischen der Oberseite 48 und der Unterseite 50.

Die Vakuumhaube 18 umfasst eine Kanaleinrichtung 53 mit mindestens einem Zufuhrkanal 54, welcher von der Oberseite 48 an die Unterseite 50 verläuft. Der Zufuhrkanal 54 liegt quer zu der Oberseite 48 und der Unterseite 50.

Der Zufuhrkanal 54 mündet an der Unterseite 50 in einen Verteiler 56 ein. An dem Verteiler 56 sind ein oder mehrere Kanäle der Kanaleinrichtung 53 angeschlossen, wobei die Kanäle insbesondere an der Unterseite 50 verlaufen und/oder zu der Unterseite 50 hin offen sind.

An der Einmündung des Zufuhrkanals 54 in die Oberseite 48 ist ein Anschluss 58 angeordnet. Es ist vorgesehen, dass der Anschluss 58 mit einer Vorrichtung zur Vakuumbeaufschlagung, wie zum Beispiel einer Pumpe, fluidwirksam verbunden wird. Auf diese Weise kann ein Unterdruckbereich zwischen einer Seite 60 des Werkstücks 52 und der Unterseite 50, welche zumindest teilweise die Seite 60 kontaktiert, hergestellt werden.

Das Werkstück 52 ist beispielsweise ein Faserverbundwerkstoff-Bauteil, welches einen Reparaturbereich 62 mit einer Beschädigung aufweist. An dem Reparaturbereich 62 ist ein Reparaturstück 64 angeordnet, welches beispielsweise ein Reparaturharz umfasst.

Zwischen dem Reparaturbereich 62 und der Vakuumhaube 18 ist ein Suszeptor 66 angeordnet. Der Suszeptor 66 ist ein loser Bestandteil der Induktionsheizvorrichtung 10. Er ist beabstandet zu der Spuleneinrichtung 14 positioniert und elektrisch von ihr über das Strukturmaterial 17 getrennt. Er ist elektrisch leitfähig und insbesondere biegeflexibel ausgebildet.

Der Suszeptor 66 ist beispielsweise ein dünnes Metallblech oder Metallnetz.

Es ist vorgesehen, dass der Suszeptor 66 durch die magnetischen Felder, welche von der Spulenvorrichtung 14 der Induktionsheizvorrichtung 10 erzeugt werden, induktiv erwärmt wird. Im Betrieb der Induktionsheizvorrichtung 10 liegt die Spuleneinrichtung 14 der Spulenlage 12 näherungsweise parallel zum Suszeptor 66.

Im Betrieb der Induktionsheizvorrichtung 10 wird durch Vakuumbeaufschlagung ein Unterdruckbereich zwischen der Seite 60 des Werkstücks 52 und der Unterseite 50 der Vakuumhaube 18 hergestellt. Durch den Unterdruckbereich wird die Vakuumhaube 18 gegen die Seite 60 des Werkstücks 52 gedrückt. Hierdurch wird näherungsweise ein konstanter Abstand zwischen der Spuleneinrichtung 14 und dem Suszeptor 66 hergestellt. Durch die insbesondere homogenen magnetischen Felder, welche von der Spuleneinrichtung 14 erzeugt werden, wird der Suszeptor 66 homogen erwärmt. Der Suszeptor 66 erwärmt wiederum das Reparaturstück 64, dessen Reparaturmaterial sich durch die Wärme im Reparaturbereich 62 stoffschlüssig mit dem Material des Werkstücks 52 verbinden kann. Nach Abschluss des Reparaturvorgangs kann die Vakuumhaube 18 bei deaktivierter Unterdruckbeaufschlagung rückstandsfrei von dem Werkstück 52 entfernt werden und für weitere Reparaturvorgänge eingesetzt werden.

Bei den nachfolgend beschriebenen Ausführungsformen einer erfindungsgemäßen Induktionsheizvorrichtung sind jene Komponenten, welche mit Komponenten der Induktionsheizvorrichtung 10 der ersten Ausführungsform identisch sind, mit den gleichen Bezugszeichen belegt. Was diese Komponenten betrifft, so gilt die Beschreibung der ersten Ausführungsform auch für die weiteren Ausführungsformen.

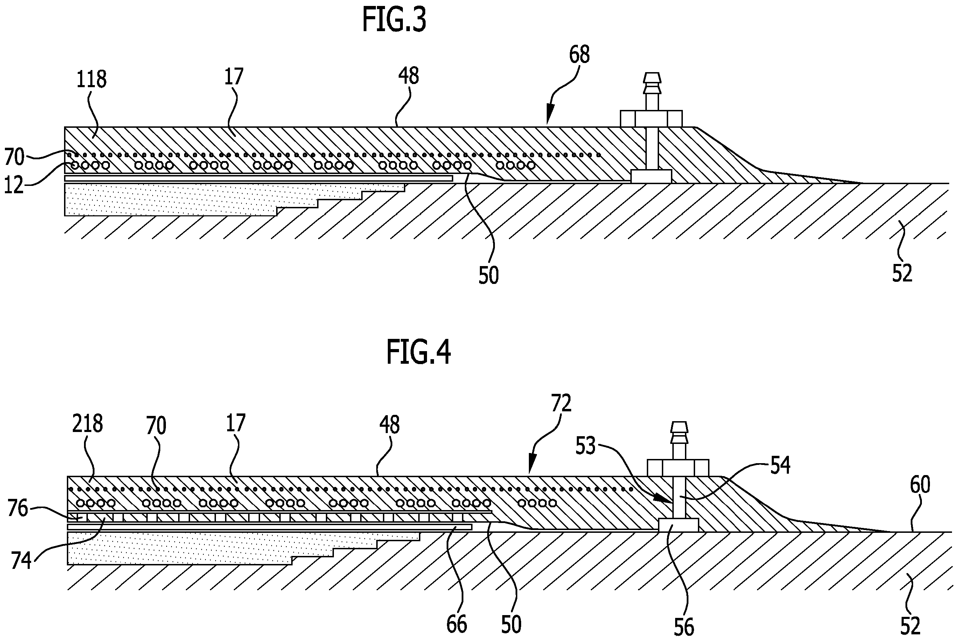

Bei einer zweiten Ausführungsform einer erfindungsgemäßen Induktionsheizvorrichtung 68 (Figur 3) mit einer Vakuumhaube 118, weist die Vakuumhaube 118 eine Verstärkungsstruktur 70 auf, welche in das Strukturmaterial 17 der Vakuumhaube 118 eingebettet ist. Die Verstärkungsstruktur 70 ist aus einem elektrischen Isolatormaterial hergestellt. Sie ist insbesondere biegeflexibel ausgebildet. Die Verstärkungsstruktur 70 ist insbesondere ein textiles Gebilde, wie ein Gewebe oder Gewirke.

Die Verstärkungsstruktur 70 liegt insbesondere zwischen der Spulenlage 12 und der Oberseite 48 der Vakuumhaube 118. Die Verstärkungsstruktur 70 ist insbesondere flächig ausgebildet.

Durch die Verstärkungsstruktur 70 kann die Formstabilität der Vakuumhaube 118 erhöht werden. Im Betrieb der Induktionsheizvorrichtung 68 können auf diese Weise Verformungen der Vakuumhaube 118, wie zum Beispiel Verformungen durch Faltenbildung, weitgehend vermieden werden.

Bei einer dritten Ausführungsform einer erfindungsgemäßen Induktionsheizvorrichtung 72 (Figur 4) mit einer Vakuumhaube 218, umfasst die Kanaleinrichtung 53 an der Unterseite 50 der Vakuumhaube 218 eine Kanalstruktur 74 mit mindestens einem Kanal. Die Kanalstruktur 74 ist an der Unterseite 50 angeordnet.

Im Betrieb der Induktionsheizvorrichtung 72 sind die Kanäle der Kanalstruktur 74 mit einer Öffnung zu der Seite 60 des Bauteils 52 bzw. zu dem Suszeptor 66 hin offen.

Die Unterseite 50 der Vakuumhaube 218 weist Wandungselemente 76 auf, welche an der Unterseite 50 Vorsprünge ausbilden und im Betrieb der Induktionsheizvorrichtung 72 an der Seite 60 des Werkstücks 52 bzw. am Suszeptor 66 zumindest teilweise anliegen. Die Wandungselemente 76 bilden die Wandungen der Kanalstruktur 74. In den Zwischenräumen der Wandungselemente 76 ist die Kanalstruktur 74 ausgebildet.

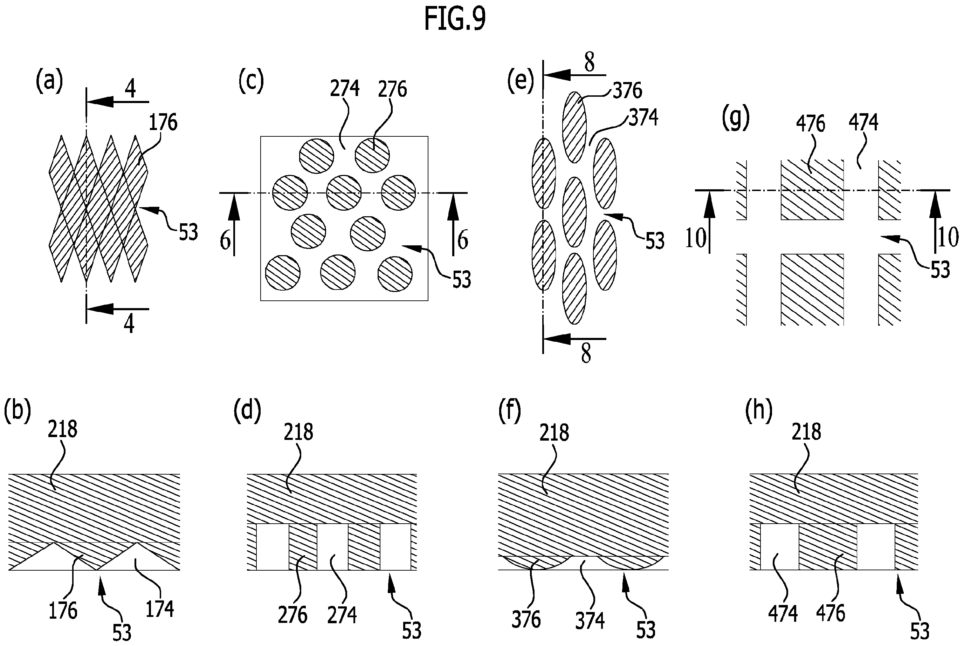

Die Wandungselemente 76 können in unterschiedlichen Geometrien ausgebildet sein. Beispielsweise sind die Wandungselemente 176 Pyramiden, die Wandungselemente 276 Zylinder, die Wandungselemente 376 Halb-Ellipsoiden und die Wandungselemente 476 Quader. Sie weisen unterschiedliche Querschnittsformen bei einer senkrechten Ansicht auf die Unterseite 50 der Vakuumhaube 218 auf. Die Wandungselemente 176 (Figur 9a) weisen eine rautenförmige Querschnittsform auf, die Wandungselemente 276 (Figur 9c) weisen eine kreisförmige Querschnittsform auf, die Wandungselemente 376 (Figur 9e) weisen eine elliptische Querschnittsform auf und die Wandungselemente 476 (Figur 9g) weisen eine rechteckige Querschnittsform auf. In den Zwischenräumen der Wandungselemente 176, 276, 376, 476 sind jeweils die Kanalstrukturen 174, 274, 374, 474 ausgebildet. Die vertikalen Querschnittsformen bei einem Schnitt senkrecht zu der Unterseite 50 der Vakuumhaube 218 sind für die Wandungselemente 176 Dreiecke (Figur 9b), für die Wandungselemente 276 Quadrate (Figur 9d), für die Wandungselemente 376 Halb-Ellipsen (Figur 9f) und für die Wandungselemente 476 Rechtecke (Figur 9h).

Die Herstellung der Wandungselemente 76 bzw. der Kanalstruktur 74 erfolgt beispielsweise durch Abtragen von Material der Vakuumhaube 218 in den Zwischenräumen der Wandungselemente 76.

Die Herstellung der Kanalstruktur 74 kann auch durch Spritzgießen mit einer geeigneten Form erfolgen. Die Form weist hierzu Ausnehmungen mit der Geometrie der Wandungselemente 76 auf. Die Ausnehmungen werden im Spritzgießverfahren mit dem Vorläufermaterial der Vakuumhaube 218 ausgefüllt. Das sich in den Ausnehmungen der Form befindliche Material bildet später die Wandungselemente 76 in Form von Vorsprüngen an der Unterseite 50 der Vakuumhaube 218 aus.

Die Kanalstruktur 74 ist insbesondere mit dem Verteiler 56 des Zufuhrkanals 54 zur Vakuumbeaufschlagung fluidwirksam verbunden. Hierdurch kann die Unterdruckbeaufschlagung über eine große Fläche an der Unterseite 50 durchgeführt werden. Auf diese Weise kann die Unterdruckbeaufschlagung effektiver durchgeführt werden und der Unterdruckbereich zwischen der Unterseite 50 der Vakuumhaube 218 und der Seite 60 des Werkstücks 52 verbessert werden.

Die Kanalstruktur 74 kann alternativ oder zusätzlich dazu genutzt werden, um im Betrieb der Induktionsheizvorrichtung 72 dem Werkstück 52 ein Infiltrationsmaterial, wie zum Beispiel ein Harz, zuzuführen.

Eine Summe von Querschnittsflächen der Öffnungen der Kanäle der Kanalstruktur 74 beträgt an der Unterseite 50 insbesondere mindestens 30 % der Gesamtfläche der Unterseite 50. Hierdurch kann die Unterdruckbeaufschlagung über eine große Fläche an der Unterseite 50 durchgeführt werden.

Insbesondere beträgt die Summe der Querschnittsflächen der Öffnungen der Kanäle der Kanalstruktur 74 an der Unterseite 50 mindestens 40 %, mindestens 50 %, mindestens 60 %, mindestens 70 %, mindestens 80 %, oder mindestens 90 % der Gesamtfläche der Unterseite 50.

Die Kanäle der Kanalstruktur 74 sind insbesondere gleichmäßig über die Unterseite 50 angeordnet. Es ist vorgesehen, dass eine gleichmäßige Anordnung der Kanäle der Kanalstruktur 74 dadurch realisiert wird, dass in einem Flächenbereich der Unterseite 50, welcher 25 % der Gesamtfläche der Unterseite 50 umfasst, die Summe der Querschnittsflächen der Öffnungen der Kanäle der Kanalstruktur 74, welche innerhalb des Flächenbereichs liegen, mindestens 10 % und höchstens 40 % der Summe der Querschnittsflächen der Öffnungen aller Kanäle der Kanalstruktur 74 beträgt.

Die Summe der Querschnittsflächen der Öffnungen der Kanäle der Kanalstruktur 74, welche innerhalb des Flächenbereichs liegen, beträgt insbesondere mindestens 15 % oder mindestens 20 %.

Die Summe der Querschnittsflächen der Öffnungen der Kanäle der Kanalstruktur 74, welche innerhalb des Flächenbereichs liegen, beträgt insbesondere höchstens 30 % oder höchstens 35 %.

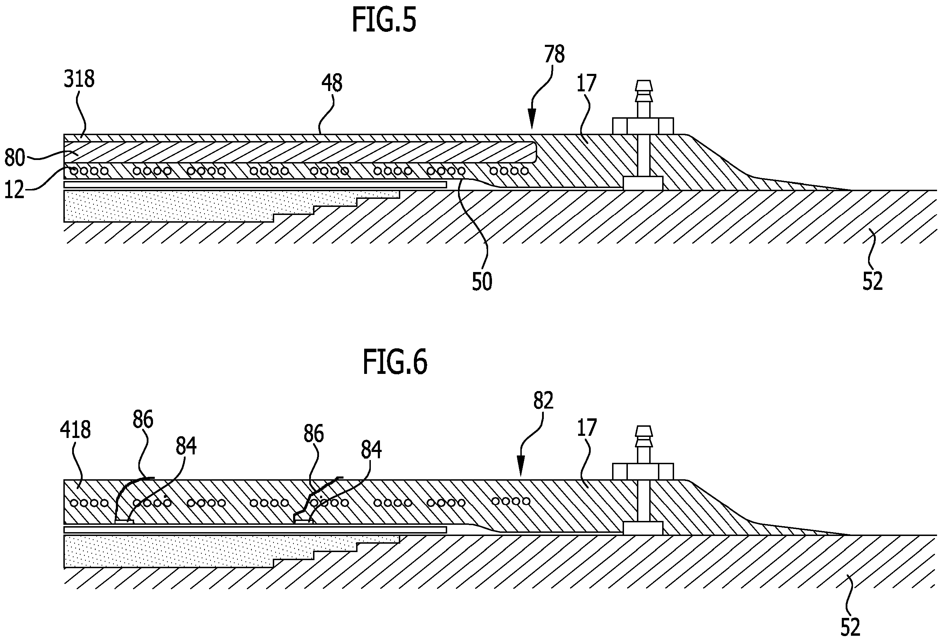

Bei einer vierten Ausführungsform einer erfindungsgemäßen Induktionsheizvorrichtung 78 (Figur 5) mit einer Vakuumhaube 318, umfasst die Vakuumhaube 318 eine thermische Isolierungslage 80, welche in das Strukturmaterial 17 der Vakuumhaube 318 eingebettet ist. Die thermische Isolierungslage 80 ist insbesondere zwischen der Spulenlage 12 und der Oberseite 48 angeordnet.

Die thermische Isolierungslage 80 ist insbesondere flächig ausgebildet. Die thermische Isolierungslage 80 ist aus einem elektrischen Isolatormaterial gebildet. Das Material der thermischen Isolierungslage 80 weist eine geringere Wärmeleitfähigkeit als das Strukturmaterial 17 der Vakuumhaube 318 auf. Die thermische Isolierungslage 80 ist beispielsweise aus einem wärmedämmenden Kunststoff wie Polystyrol hergestellt.

Im Betrieb der Induktionsheizvorrichtung 78 kann durch die thermische Isolierungslage 80 eine Wärmeabstrahlung durch die Oberseite 48 der Vakuumhaube 318 vermieden oder zumindest reduziert werden. Hierdurch wird der Wirkungsgrad der Induktionsheizvorrichtung 78 erhöht.

Bei einer fünften Ausführungsform einer erfindungsgemäßen Induktionsheizvorrichtung 82 (Figur 6) mit einer Vakuumhaube 418, weist die Vakuumhaube 418 mindestens einen Sensor 84 auf, welcher an der Unterseite 50 angeordnet ist. Der Sensor 84 kann zumindest teilweise in das Material der Vakuumhaube 418 eingebettet sein. Der Sensor 84 weist eine Zuleitung 86 auf, welche in elektrisch wirksamem Kontakt mit dem Sensor 84 steht und durch das Material der Vakuumhaube 418 nach außen geführt ist.

Der Sensor 84 ist beispielsweise ein Temperatursensor oder Drucksensor.

Durch den Sensor 84 können im Betrieb der Induktionsheizvorrichtung 82 Messwerte an der Unterseite 50 der Vakuumhaube 418 erfasst werden. Diese Messwerte können beispielsweise zu einer Steuerung und/oder Regelung von Parametern, wie zum Beispiel Druck und/oder Temperatur, eingesetzt werden.

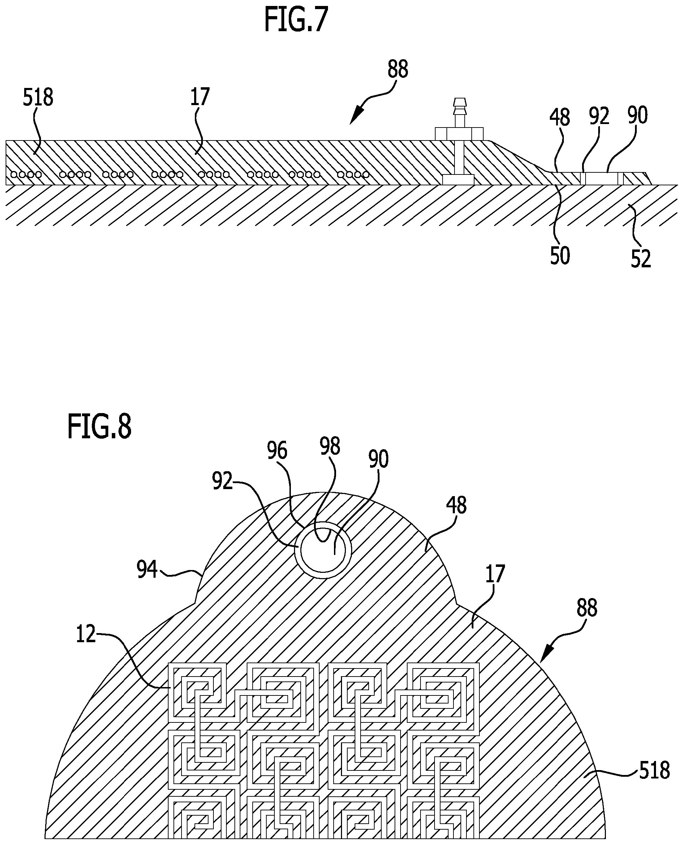

Bei einer sechsten Ausführungsform einer erfindungsgemäßen Induktionsheizvorrichtung 88 (Figur 7 und Figur 8) mit einer Vakuumhaube 518, weist die Vakuumhaube 518 eine Fixierungseinrichtung mit einer Lasche und einer Ausnehmung 90 auf. Die Begrenzung der Ausnehmung 90 weist ein Randelement 92 auf.

Insbesondere ist die Lasche mit der Vakuumhaube 518 einstückig verbunden. Beispielsweise sind Lasche und Vakuumhaube 518 aus demselben Strukturmaterial 17 gebildet. Hierdurch kann ein integrales Bauteil bestehend aus Vakuumhaube 518 und Lasche in einem Arbeitsschritt im Spritzgießverfahren hergestellt werden.

Die Ausnehmung 90 ist vorzugsweise in einem Bereich zwischen der Spulenlage 12 und einer äußeren Berandung 94 der Vakuumhaube 518 angeordnet. Sie verläuft von der Oberseite 48 zu der Unterseite 50.

Das Randelement 92 weist eine der Ausnehmung 90 zugewandte Innenseite 96 und eine dem Strukturmaterial 17 der Vakuumhaube 518 zugewandte Außenseite 98 auf. Die Außenseite 98 kontaktiert das Strukturmaterial 17 der Vakuumhaube 518. Das Randelement 92 kann alternativ oder zusätzlich zumindest teilweise in das Strukturmaterial 17 der Vakuumhaube 518 eingebettet sein.

Es ist vorgesehen, dass die Vakuumhaube 518 mit der Ausnehmung 90 an einer externen Befestigungsvorrichtung und/oder an dem Werkstück 52 befestigt wird. Die externe Befestigungsvorrichtung wird insbesondere durch die Ausnehmung 90 der Vakuumhaube 518 geführt. Sie kontaktiert zumindest teilweise die Innenseite 96 des Randelements 92. Hierdurch können Kräfte auf die Vakuumhaube 518 ausgeübt werden, wodurch die Vakuumhaube 518 an einer Position fixiert werden kann.

Die externe Befestigungsvorrichtung kann beispielsweise ein Haken oder ein Seil sein, welches durch die Ausnehmung 90 geführt wird.

Auf diese Weise kann die Induktionsheizvorrichtung 88 beispielsweise vertikal zur Bodenfläche fixiert werden und an ein Werkstück 52 angelegt werden, bevor die Vakuumbeaufschlagung aktiviert wird.

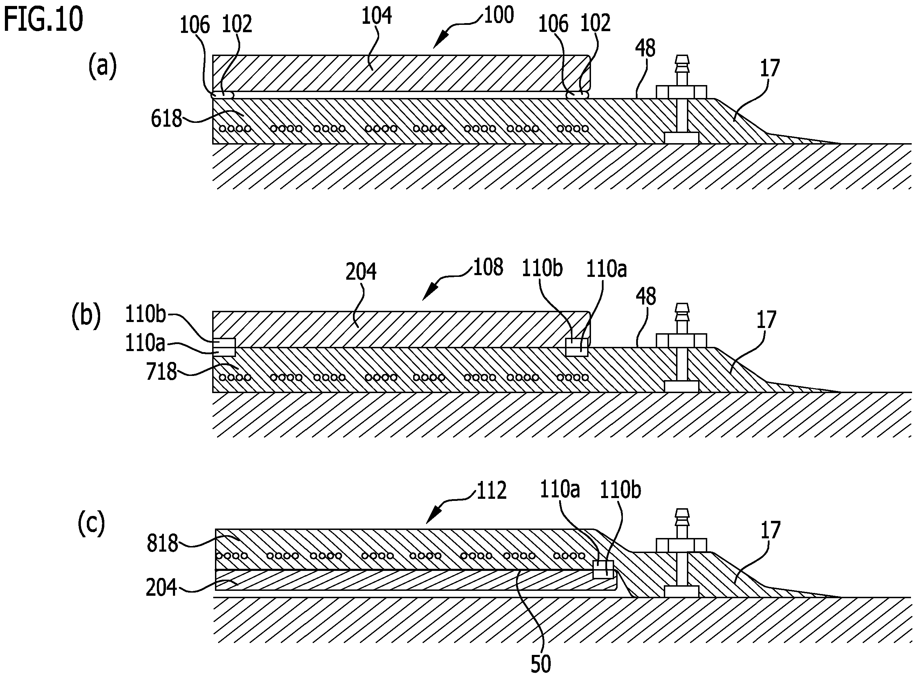

Bei einer siebten Ausführungsform einer erfindungsgemäßen Induktionsheizvorrichtung 100 (Figur 10a) mit einer Vakuumhaube 618, ist es vorgesehen, dass über eine Verbindungseinrichtung mit mindestens einem Verbindungselement 102 mindestens eine Zusatzlage 104 mit der Oberseite 48 der Vakuumhaube 618 lösbar verbindbar ist.

Die Zusatzlage 104 kann beispielsweise die thermische Isolierungslage 80, die Verstärkungsstruktur 70 sein oder eine Flusshilfe für Harz sein.

Das Verbindungselement 102 ist an der Oberseite 48 der Vakuumhaube 618 angeordnet und mit der Oberseite 48 fest verbunden. Beispielsweise ist das Verbindungselement 102 durch einen Klebstoff mit der Oberseite 48 stoffschlüssig verbunden.

Die Zusatzlage 104 weist ihrerseits ebenfalls ein mit ihr fest verbundenes Verbindungselement 106 auf, welches mit dem Verbindungselement 102 der Vakuumhaube 618 lösbar verbindbar ist.

Das Verbindungselement 102 stellt insbesondere ein Gegenstück zu dem Verbindungselement 106 dar. Beispielsweise sind die Verbindungselemente 102, 106 als Klettverbindung ausgeführt. In diesem Fall stellt das Verbindungselement 102 das Gegenstück eines Klettverschlusses zu dem des Verbindungselements 106 dar. Die Verbindungselemente 102, 106 können alternativ als Druckknopfverbindung ausgeführt sein. In diesem Fall weist das Verbindungselement 102 einen Druckknopf auf und das Verbindungselement 106 sein Gegenstück (oder umgekehrt).

Die Zusatzlage 104 ist insbesondere biegeflexibel ausgebildet.

Es kann vorgesehen sein, dass eine lösbare Verbindung zwischen der Zusatzlage 204 und der Oberseite 48 über mehrere Verbindungselemente 104, 106 hergestellt wird.

Bei einer achten Ausführungsform einer erfindungsgemäßen Induktionsheizvorrichtung 108 (Figur 10b) mit einer Vakuumhaube 718 ist es vorgesehen, dass die Verbindungseinrichtung mindestens ein Paar von Permanentmagneten 110a, 110b umfasst, über welches eine Zusatzlage 204 mit der Oberseite 48 der Vakuumhaube 718 lösbar verbunden werden kann.

Das Paar von Permanentmagneten umfasst einen ersten Permanentmagneten 110a und einen gegenpoligen zweiten Permanentmagneten 110b. Die Permanentmagneten 110a, 110b ziehen sich daher gegenseitig an.

Der erste Permanentmagnet 110a ist an der Oberseite 48 angeordnet und mit der Oberseite 48 fest verbunden. Er kann zusätzlich zumindest teilweise in das Strukturmaterial 17 der Vakuumhaube 718 eingebettet sein.

Die Zusatzlage 204 umfasst den zweiten Permanentmagneten 110b, welcher fest mit der Zusatzlage 204 verbunden ist. Er kann zusätzlich zumindest teilweise in das Material der Zusatzlage 204 eingebettet sein. Der zweite Permanentmagnet 110b ist insbesondere an einer Außenseite der Zusatzlage 204 angeordnet. Der zweite Permanentmagnet 110b ist insbesondere derart angeordnet, dass er an den ersten Permanentmagneten 110a an der Oberseite 48 der Induktionsheizvorrichtung 718 angenähert werden kann, sodass eine hinreichend starke Anziehung zwischen den Permanentmagneten 110a, 110b erfolgt, um die Zusatzlage 204 mit der Oberseite 48 lösbar zu verbinden.

Auf diese Weise kann eine lösbare Verbindung durch magnetische Kräfte zwischen der Zusatzlage 204 und der Oberseite 48 der Vakuumhaube 718 hergestellt werden.

Es kann vorgesehen sein, dass eine lösbare Verbindung zwischen der Zusatzlage 204 und der Oberseite 48 über mehrere Paare von Permanentmagneten 110a, 110b hergestellt wird.

Bei einer neunten Ausführungsform einer erfindungsgemäßen Induktionsheizvorrichtung 112 (Figur 10c) mit einer Vakuumhaube 818 ist mindestens ein erster Permanentmagnet 110a an der Unterseite 50 der Vakuumhaube 818 angeordnet und mit der Unterseite 50 fest verbunden. Er kann zusätzlich zumindest teilweise in das Strukturmaterial 17 der Vakuumhaube 818 eingebettet sein.

Auf diese Weise kann analog zu der vorherigen Ausführungsform eine lösbare Verbindung der Zusatzlage 204 mit der Unterseite 50 der Vakuumhaube 818 hergestellt werden.

Es kann vorgesehen sein, dass mehrere Zusatzlagen 104, 204 über Verbindungselemente 102, 106 und/oder Paare von Permanentmagneten 110a, 110b mit der Vakuumhaube 618, 718, 818 verbunden werden können.

Die Merkmale der vorstehend erläuterten Ausführungsformen 1 bis 9 können sowohl in beliebigen Kombinationen als auch in Alleinstellung verwendet werden.

Erfindungsgemäß wird eine Induktionsheizvorrichtung mit einer Spuleneinrichtung 14 bereitgestellt, bei welcher aufgrund der Vermeidung von sich gegenseitig auslöschenden Feldern eine homogene magnetische Feldverteilung bereitstellbar ist. Es lassen sich dadurch homogene Erwärmungen eines Suszeptors 66 erreichen.

Durch Vakuumbeaufschlagung kann ein konstanter Abstand zwischen der Spuleneinrichtung 14 und dem Werkstück 52 hergestellt werden. Da die Induktionsheizvorrichtung 10 biegeflexibel ausgebildet ist, können solche homogenen Erwärmungen auch Werkstücken 52 mit gekrümmter Seite 60 erreicht werden.

Die "Heizfläche" der Spuleneinrichtung 14 lässt sich grundsätzlich beliebig erweitern bzw. es lässt sich eine Größenanpassung durchführen. Hierzu kann eine Größenanpassung der spiralförmigen Wicklungen 32 erfolgen. Ferner kann die Anzahl der Reihen 34 und die Anzahl der Spalten 36 variiert werden. Hierdurch können Induktionsheizvorrichtungen mit unterschiedlich großer "Heizfläche" auf einfache Weise hergestellt werden.

Eine Variation der "Heizfläche" kann auch dadurch erreicht werden, dass mehrere Spulenlagen 12 nebeneinander in der Vakuumhaube 18 angeordnet werden. Optional können verschiedene Spulenlagen 12 getrennt voneinander angesteuert werden. Auf diese Weise können unterschiedliche Bereiche eines oder mehrerer Suszeptoren 66 selektiv erwärmt werden.

Eine Vakuumbeaufschlagung zwischen der Unterseite 50 der Vakuumhaube 18 und der Seite 60 des Werkstücks 52 ist insbesondere auch dann möglich, wenn die Unterseite 50 nur in teilweisem Kontakt mit der Seite 60 steht. Dieser Fall tritt beispielsweise auf, wenn die Vakuumhaube 18 durch einen an der Unterseite 50 angeordneten Suszeptor 66 von der Seite 60 des Werkstücks 52 weggedrückt wird. In dem entstehenden Hohlraum zwischen der Seite 60 und der Unterseite 50 ist eine Unterdruckbeaufschlagung möglich, sofern, bezogen auf das Zentrum der Vakuumhaube 18, konzentrisch angeordnete Randbereiche existieren, welche den Reparaturbereich 62 umgeben und in welchen die Unterseite 50 die Seite 60 gasdicht kontaktiert.

Erfindungsgemäß wird eine Vakuumhaubenvorrichtung bereitgestellt, die eine Induktionsheizvorrichtung umfasst. Die Induktionsheizvorrichtung ist in die Vakuumhaubenvorrichtung integriert.

Zur Durchführung eines Reparaturverfahrens mit der erfindungsgemäßen Induktionsheizvorrichtung 10 wird das Werkstück 52 zunächst an dem Reparaturbereich 62 mit dem Reparaturstück 64 versehen. Das Reparaturstück 64 enthält ein Reparaturmaterial, welches sich durch Erwärmung stoffschlüssig mit dem Material des Werkstücks 52 verbinden kann. Hierdurch kann die beschädigte Struktur im Reparaturbereich 62 des Werkstücks 52 wiederhergestellt werden.

In einem nächsten Schritt wird der Suszeptor 66 auf der Seite 60 oberhalb des Reparaturbereichs 62 angeordnet. Die Vakuumhaube 18 wird mit ihrer Unterseite 50 über den Suszeptor 66 gelegt, sodass sich die Spulenlage 12 oberhalb des Suszeptors 66 befindet. Die Begrenzungen der Unterseite 50 ragen über die Begrenzungen des Suszeptors 66 hinaus.

Der Anschluss 58 wird anschließend mit einer Pumpe zur Vakuumbeaufschlagung verbunden. Bei eingeschalteter Pumpe wird Luft aus dem Zwischenraum zwischen der Seite 60 und der Unterseite 50 gepumpt. Hierdurch entsteht ein Unterdruckbereich zwischen der Seite 60 und der Unterseite 50.

Durch die Hochfrequenzquelleneinrichtung 24 wird ein hochfrequentes elektromagnetisches Wechselfeld erzeugt, mit welchem die Hochfrequenzlitze 20 beaufschlagt wird. Durch die hierdurch entstehenden homogenen magnetischen Wechselfelder werden Ströme in dem Suszeptor 66 induziert, wodurch sich der Suszeptor 66 erwärmt. Der Suszeptor 66 erwärmt wiederum den Reparaturbereich 62 beziehungsweise das Reparaturstück 64, welches unterhalb des Suszeptors 66 angeordnet ist. Durch die Erwärmung des Reparaturmaterials des Reparaturstücks 64 wird, wie vorstehend beschrieben, die defekte Stelle des Werkstücks 52 repariert.

Während des Reparaturvorgangs kann die Temperatur des Suszeptors 66 über die Stromstärke gesteuert werden, mit welcher die Hochfrequenzlitze 20 über die Hochfrequenzquelleneinrichtung 24 beaufschlagt wird.

Nach Abschluss des Reparaturvorgangs kann das elektromagnetische Wechselfeld sowie die Unterdruckbeaufschlagung deaktiviert werden. Anschließend können die Vakuumhaube 18 sowie der Suszeptor 66 von dem Werkstück 52 entfernt werden.

Eine Ausführungsform der Vakuumhaube 118 weist die Verstärkungsstruktur 70 auf. Hierdurch wird die Formstabilität der Vakuumhaube 118 erhöht. Hierdurch kann eine Falten- bzw. Wellenbildung der Oberseite 48 und der Unterseite 50 der Vakuumhaube 118 beim Auflegen der Vakuumhaube 118 auf die Seite 60 des Werkstücks 52 vermieden werden.

Eine Ausführungsform der Vakuumhaube 218 weist eine Kanalstruktur 74 an der Unterseite 50 auf. Hierdurch kann Luft schneller aus dem Zwischenraum zwischen der Seite 60 und der Unterseite 50 abgepumpt werden und damit die Unterdruckbeaufschlagung effektiver durchgeführt werden.

Eine Ausführungsform der Vakuumhaube 318 weist die thermische Isolierungslage 80 auf. Dies führt zu einer reduzierten Wärmeabstrahlung während des Heizvorgangs über die Oberseite 48. Hierdurch kann eine effizientere Erwärmung des Suszeptors 66 erreicht werden, da weniger Wärme über die Oberseite 48 abgestrahlt werden kann. Hierdurch kann der Suszeptor 66 bei gleicher Stromstärke, mit welcher die Hochfrequenzlitze 20 beaufschlagt wird, auf höhere Temperaturen erwärmt werden. Ferner kann die Homogenität der Temperaturverteilung an der Unterseite 50 verbessert werden.

Bei einer Ausführungsform weist die Vakuumhaube 418 mindestens einen Sensor 84 auf, welcher an der Unterseite 50 der Vakuumhaube 418 angeordnet ist und mit welchem Messwerte an der Unterseite 50 während des Reparaturvorgangs erfasst werden können. Hierdurch ist es möglich, mit einem geeigneten Steuergerät während des Reparaturvorgangs beispielsweise den Druck und/oder die Temperatur an dem Reparaturstück 64 bzw. am Suszeptor 66 zu steuern und/oder zu regeln.

Eine Ausführungsform der Vakuumhaube 518 umfasst eine Fixierungseinrichtung mit einer Ausnehmung 90. An der Ausnehmung 90 kann die Vakuumhaube 518 an einer vorgesehenen Stelle fixiert werden. Es kann beispielsweise ein Haken oder ein Seil durch die Ausnehmung 90 geführt werden. Hierdurch kann das Anlegen der Vakuumhaube 518 an die Seite 60 des Werkstücks 52 erleichtert werden. Dies ist insbesondere der Fall, wenn die Vakuumhaube 518 in vertikaler Ausrichtung zum Boden an die Seite 60 des Werkstücks 52 angelegt werden soll. Hierdurch kann ein Abrutschen der Vakuumhaube 518 von der Seite 60 des Werkstücks 52 verhindert werden, bevor die Unterdruckbeaufschlagung aktiviert wird.

Bei einer Ausführungsform der Vakuumhaube 618, 718, 818 kann mindestens eine Zusatzlage 104, 204 mit der Vakuumhaube 618, 718, 818 lösbar verbunden werden. Die Zusatzlage 104, 204 kann beispielsweise die thermische Isolierungslage 80, die Verstärkungsstruktur 70, oder eine Flusshilfe für Harz sein. Hierdurch kann die Vakuumhaube 618, 718, 818 flexibel und auf einfache Weise um Bestandteile erweitert bzw. reduziert werden. Die Ausstattung der Vakuumhaube 618, 718, 818 kann flexibel an die Erfordernisse des jeweiligen Reparaturvorgangs angepasst werden.

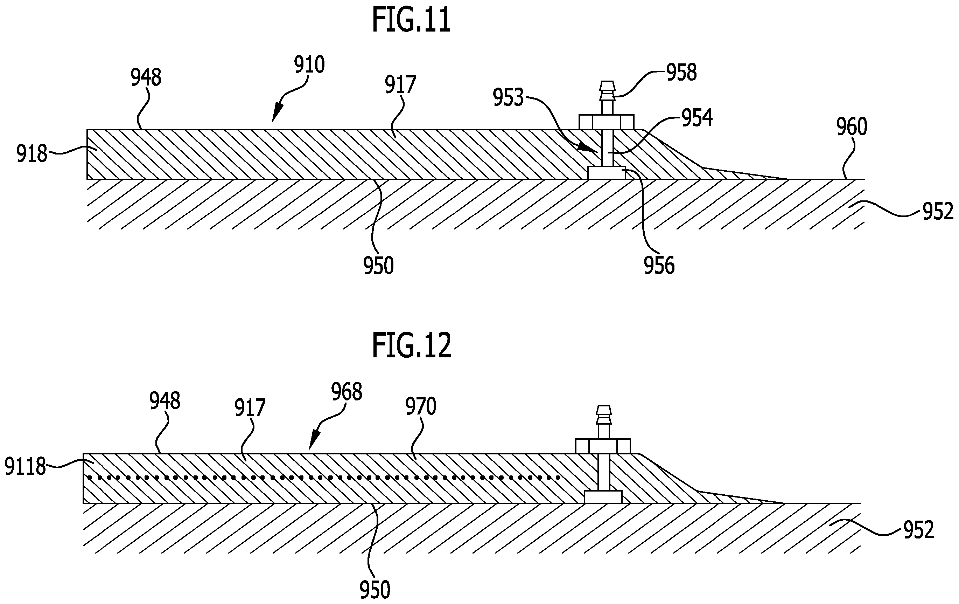

Ein erstes Ausführungsbeispiel einer erfindungsgemäßen Vakuumhaubenvorrichtung, welche in Figur 11 schematisch dargestellt und dort mit 910 bezeichnet ist, umfasst eine Vakuumhaube 918.

Die Vakuumhaube 918 ist insbesondere aus einem Strukturmaterial 917 hergestellt, welches biegeflexibel und gasdicht ist. Das Strukturmaterial 917 der Vakuumhaube 918 ist beispielsweise ein Silikonmaterial.

Das Vorläufermaterial der Vakuumhaube 918 ist insbesondere gieß- und spritzfähig. Dies ermöglicht es, die Vakuumhaube 918 im Spritzgießverfahren herzustellen.

Die Vakuumhaube 918 weist eine Oberseite 948 und eine Unterseite 950 auf. Im Betrieb der Vakuumhaubenvorrichtung 910 ist die Unterseite 950 einem Werkstück 952 zugewandt und die Oberseite 948 dem Werkstück 952 abgewandt.

Die Vakuumhaube 918 umfasst eine Kanaleinrichtung 953 mit mindestens einem Zufuhrkanal 954, welcher von der Oberseite 948 an die Unterseite 950 verläuft. Der Zufuhrkanal 954 liegt quer zu der Oberseite 948 und der Unterseite 950.

Der Zufuhrkanal 954 mündet an der Unterseite 950 in einen Verteiler 956 ein. An dem Verteiler 956 sind ein oder mehrere Kanäle der Kanaleinrichtung 953 angeschlossen, wobei die Kanäle insbesondere an der Unterseite 950 verlaufen und/oder zu der Unterseite 950 hin offen sind.

An der Einmündung des Zufuhrkanals 954 in die Oberseite 948 ist ein Anschluss 958 angeordnet. Es ist vorgesehen, dass der Anschluss 958 mit einer Vorrichtung zur Vakuumbeaufschlagung, wie zum Beispiel einer Pumpe, fluidwirksam verbunden wird. Auf diese Weise kann ein Unterdruckbereich zwischen einer Seite 960 des Werkstücks 952 und der Unterseite 950, welche zumindest teilweise die Seite 960 kontaktiert, hergestellt werden.

Im Betrieb der Vakuumhaubenvorrichtung 910 wird durch Vakuumbeaufschlagung ein Unterdruckbereich zwischen der Seite 960 des Werkstücks 952 und der Unterseite 950 der Vakuumhaube 918 hergestellt. Durch den Unterdruckbereich wird die Vakuumhaube 918 gegen die Seite 960 des Werkstücks 952 gedrückt. Hierdurch wird näherungsweise ein konstanter Abstand zwischen der Vakuumhaube 918 und der Seite 960 hergestellt.

Bei den nachfolgend beschriebenen Ausführungsformen einer erfindungsgemäßen Vakuumhaubenvorrichtung sind jene Komponenten, welche mit Komponenten der Vakuumhaubenvorrichtung 910 der ersten Ausführungsform identisch sind, mit den gleichen Bezugszeichen belegt. Was diese Komponenten betrifft, so gilt die Beschreibung der ersten Ausführungsform auch für die weiteren Ausführungsformen.

Bei einer zweiten Ausführungsform einer erfindungsgemäßen Vakuumhaubenvorrichtung 968 (Figur 12) mit einer Vakuumhaube 9118, weist die Vakuumhaube 9118 eine Verstärkungsstruktur 970 auf, welche in das Strukturmaterial 917 der Vakuumhaube 9118 eingebettet ist. Die Verstärkungsstruktur 970 ist aus einem elektrischen Isolatormaterial hergestellt. Sie ist insbesondere biegeflexibel ausgebildet. Die Verstärkungsstruktur 970 ist insbesondere ein textiles Gebilde, wie ein Gewebe oder Gewirke.

Die Verstärkungsstruktur 970 liegt insbesondere zwischen der Unterseite 950 und der Oberseite 948 der Vakuumhaube 9118. Die Verstärkungsstruktur 970 ist insbesondere flächig ausgebildet.

Durch die Verstärkungsstruktur 970 kann die Formstabilität der Vakuumhaube 9118 erhöht werden. Im Betrieb der Vakuumhaubenvorrichtung 968 können auf diese Weise unerwünschte Verformungen der Vakuumhaube 9118, wie zum Beispiel Verformungen durch Faltenbildung, weitgehend vermieden werden.

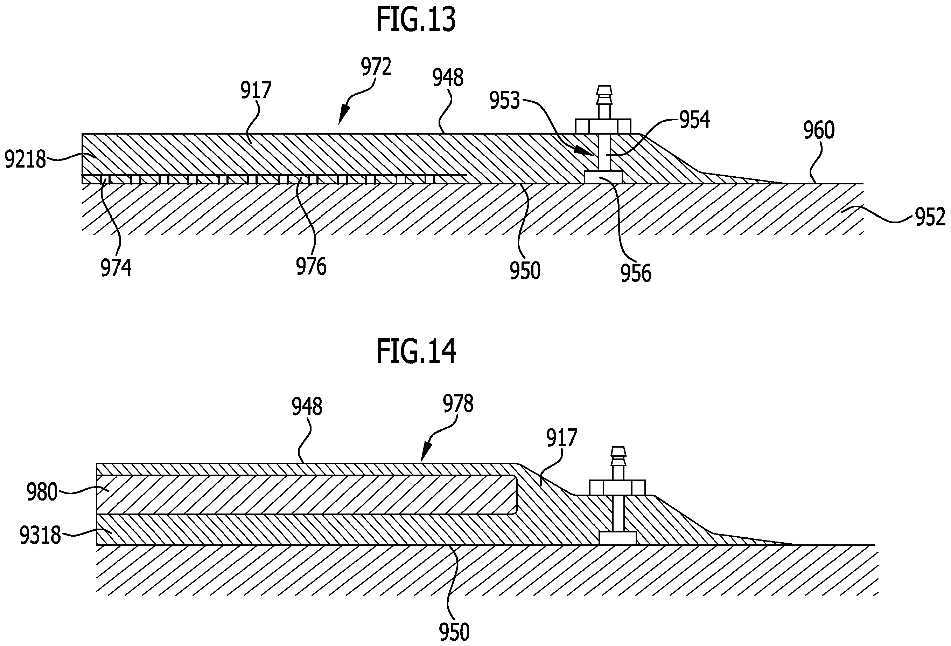

Bei einer dritten Ausführungsform einer erfindungsgemäßen Vakuumhaubenvorrichtung 972 (Figur 13) mit einer Vakuumhaube 9218, umfasst die Kanaleinrichtung 953 an der Unterseite 950 der Vakuumhaube 9218 eine Kanalstruktur 974 mit mindestens einem Kanal. Die Kanalstruktur 974 ist an der Unterseite 950 angeordnet.

Im Betrieb der Vakuumhaubenvorrichtung 972 sind die Kanäle der Kanalstruktur 974 mit einer Öffnung zu der Seite 960 des Bauteils 952 hin offen.

Die Unterseite 950 der Vakuumhaube 9218 weist Wandungselemente 976 auf, welche an der Unterseite 950 Vorsprünge ausbilden und im Betrieb der Vakuumhaubenvorrichtung 972 an der Seite 960 des Werkstücks 952 zumindest teilweise anliegen. Die Wandungselemente 976 bilden die Wandungen der Kanalstruktur 974. In den Zwischenräumen der Wandungselemente 976 ist die Kanalstruktur 974 ausgebildet.

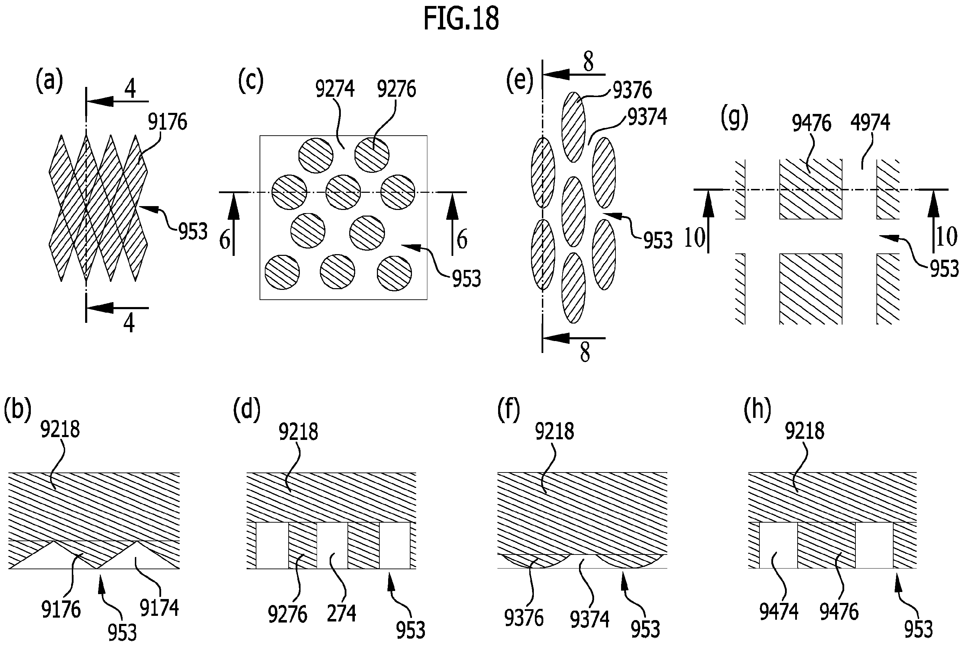

Die Wandungselemente 976 können in unterschiedlichen Geometrien ausgebildet sein. Beispielsweise sind die Wandungselemente 9176 Pyramiden, die Wandungselemente 9276 Zylinder, die Wandungselemente 9376 Halb-Ellipsoiden und die Wandungselemente 9476 Quader. Sie weisen unterschiedliche Querschnittsformen bei einer senkrechten Ansicht auf die Unterseite 950 der Vakuumhaube 9218 auf. Die Wandungselemente 9176 (Figur 18a) weisen eine rautenförmige Querschnittsform auf, die Wandungselemente 9276 (Figur 18c) weisen eine kreisförmige Querschnittsform auf, die Wandungselemente 9376 (Figur 18e) weisen eine elliptische Querschnittsform auf und die Wandungselemente 9476 (Figur 18g) weisen eine rechteckige Querschnittsform auf. In den Zwischenräumen der Wandungselemente 9176, 9276, 9376, 9476 sind jeweils die Kanalstrukturen 9174, 9274, 9374, 9474 ausgebildet. Die vertikalen Querschnittsformen bei einem Schnitt senkrecht zu der Unterseite 950 der Vakuumhaube 9218 sind für die Wandungselemente 9176 Dreiecke (Figur 18b), für die Wandungselemente 9276 Quadrate (Figur 18d), für die Wandungselemente 9376 Halb-Ellipsen (Figur 18f) und für die Wandungselemente 9476 Rechtecke (Figur 18h).

Die Herstellung der Wandungselemente 976 bzw. der Kanalstruktur 974 erfolgt beispielsweise durch Abtragen von Material der Vakuumhaube 9218 in den Zwischenräumen der Wandungselemente 976.

Die Herstellung der Kanalstruktur 974 kann auch durch Spritzgießen mit einer geeigneten Form erfolgen. Die Form weist hierzu Ausnehmungen mit der Geometrie der Wandungselemente 976 auf. Die Ausnehmungen werden im Spritzgießverfahren mit dem Vorläufermaterial der Vakuumhaube 9218 ausgefüllt. Das sich in den Ausnehmungen der Form befindliche Material bildet später die Wandungselemente 976 in Form von Vorsprüngen an der Unterseite 950 der Vakuumhaube 9218 aus.

Die Kanalstruktur 974 ist insbesondere mit dem Verteiler 956 des Zufuhrkanals 954 zur Vakuumbeaufschlagung verbunden. Hierdurch kann die Unterdruckbeaufschlagung über eine große Fläche an der Unterseite 950 durchgeführt werden. Auf diese Weise kann die Unterdruckbeaufschlagung effektiver durchgeführt werden und der Unterdruckbereich zwischen der Unterseite 950 der Vakuumhaube 918 und der Seite 960 des Werkstücks 952 verbessert werden.

Die Kanalstruktur 974 kann alternativ oder zusätzlich dazu genutzt werden, um im Betrieb der Vakuumhaubenvorrichtung 972 dem Werkstück 952 ein Infiltrationsmaterial, wie zum Beispiel ein Harz, zuzuführen.

Eine Summe von Querschnittsflächen der Öffnungen der Kanäle der Kanalstruktur 974 beträgt an der Unterseite 950 insbesondere mindestens 30 % der Gesamtfläche der Unterseite 950. Hierdurch kann die Unterdruckbeaufschlagung über eine große Fläche an der Unterseite 950 durchgeführt werden.

Insbesondere beträgt die Summe der Querschnittsflächen der Öffnungen der Kanäle der Kanalstruktur 974 an der Unterseite 950 mindestens 40 %, mindestens 50 %, mindestens 60 %, mindestens 70 %, mindestens 80 %, oder mindestens 90 % der Gesamtfläche der Unterseite.

Die Kanäle der Kanalstruktur 974 sind insbesondere gleichmäßig über die Unterseite 950 angeordnet. Es ist vorgesehen, dass eine gleichmäßige Anordnung der Kanäle der Kanalstruktur 974 dadurch realisiert wird, dass in einem Flächenbereich der Unterseite 950, welcher 25 % der Gesamtfläche der Unterseite 950 umfasst, die Summe der Querschnittsflächen der Öffnungen der Kanäle der Kanalstruktur 974, welche innerhalb des Flächenbereichs liegen, mindestens 10 % und höchstens 40 % der Summe der Querschnittsflächen der Öffnungen aller Kanäle der Kanalstruktur 974 beträgt.

Die Summe der Querschnittsflächen der Öffnungen der Kanäle der Kanalstruktur 974, welche innerhalb des Flächenbereichs liegen, beträgt insbesondere mindestens 15 % oder mindestens 20 % der Summe der Querschnittsflächen der Öffnungen aller Kanäle der Kanalstruktur 974.

Die Summe der Querschnittsflächen der Öffnungen der Kanäle der Kanalstruktur 974, welche innerhalb des Flächenbereichs liegen, beträgt insbesondere höchstens 30 % oder höchstens 35 % der Summe der Querschnittsflächen der Öffnungen aller Kanäle der Kanalstruktur 974.

Bei einer vierten Ausführungsform einer erfindungsgemäßen Vakuumhaubenvorrichtung 978 (Figur 14) mit einer Vakuumhaube 9318, umfasst die Vakuumhaube 9318 eine thermische Isolierungslage 980, welche in das Strukturmaterial 917 der Vakuumhaube 9318 eingebettet ist. Die thermische Isolierungslage 980 ist insbesondere zwischen der Unterseite 950 und der Oberseite 948 angeordnet.

Die thermische Isolierungslage 980 ist insbesondere flächig ausgebildet. Das Material der thermischen Isolierungslage 980 weist eine geringere Wärmeleitfähigkeit als das Strukturmaterial 917 der Vakuumhaube 9318 auf. Die thermische Isolierungslage 980 ist beispielsweise aus einem wärmedämmenden Kunststoff wie Polystyrol hergestellt.

Im Betrieb der Vakuumhaubenvorrichtung 978 kann durch die thermische Isolierungslage 980 eine Wärmeabstrahlung durch die Oberseite 948 der Vakuumhaube 9318 vermieden oder zumindest reduziert werden.

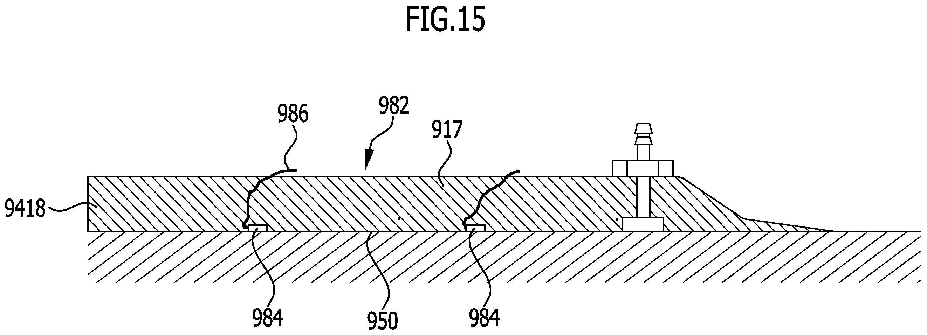

Bei einer fünften Ausführungsform einer erfindungsgemäßen Vakuumhaubenvorrichtung 982 (Figur 15) mit einer Vakuumhaube 9418, weist die Vakuumhaube 9418 mindestens einen Sensor 984 auf, welcher an der Unterseite 950 angeordnet ist. Der Sensor 984 kann zumindest teilweise in das Material der Vakuumhaube 9418 eingebettet sein. Der Sensor 984 weist eine Zuleitung 986 auf, welche in elektrisch wirksamem Kontakt mit dem Sensor 984 steht und durch das Material der Vakuumhaube 9418 nach außen geführt ist.

Der Sensor 984 ist beispielsweise ein Temperatursensor oder Drucksensor.

Durch den Sensor 984 können im Betrieb der Vakuumhaubenvorrichtung 982 Messwerte an der Unterseite 950 der Vakuumhaube 9418 erfasst werden. Diese Messwerte können beispielsweise zu einer Steuerung und/oder Regelung von Parametern, wie zum Beispiel Druck und/oder Temperatur, eingesetzt werden.

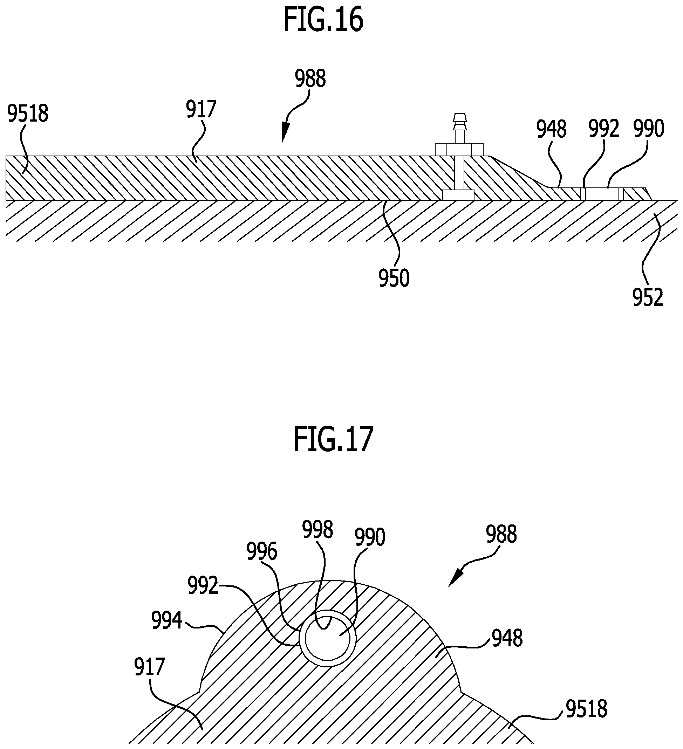

Bei einer sechsten Ausführungsform einer erfindungsgemäßen Vakuumhaubenvorrichtung 988 (Figur 16 und Figur 17) mit einer Vakuumhaube 9518, weist die Vakuumhaube 9518 eine Fixierungseinrichtung mit einer Lasche und einer Ausnehmung 990 auf. Die Begrenzung der Ausnehmung 990 weist ein Randelement 992 auf.

Insbesondere ist die Lasche mit der Vakuumhaube 9518 einstückig verbunden. Beispielsweise sind Lasche und Vakuumhaube 9518 aus demselben Strukturmaterial 917 gebildet. Hierdurch kann ein integrales Bauteil bestehend aus Vakuumhaube 9518 und Lasche in einem Arbeitsschritt im Spritzgießverfahren hergestellt werden.

Die Ausnehmung 990 ist vorzugsweise nahe einer äußeren Berandung 994 der Vakuumhaube 9518 angeordnet. Sie verläuft von der Oberseite 948 zu der Unterseite 950.

Das Randelement 992 weist eine der Ausnehmung 990 zugewandte Innenseite 996 und eine dem Strukturmaterial 917 der Vakuumhaube 9518 zugewandte Außenseite 998 auf. Die Außenseite 998 kontaktiert das Strukturmaterial 917 der Vakuumhaube 9518. Das Randelement 992 kann alternativ oder zusätzlich zumindest teilweise in das Strukturmaterial 917 der Vakuumhaube 9518 eingebettet sein.

Es ist vorgesehen, dass die Vakuumhaube 9518 mit der Ausnehmung 990 an einer externen Befestigungsvorrichtung und/oder an dem Werkstück 952 befestigt wird. Die externe Befestigungsvorrichtung wird insbesondere durch die Ausnehmung 990 der Vakuumhaube 9518 geführt. Sie kontaktiert zumindest teilweise die Innenseite 996 des Randelements 992. Hierdurch können Kräfte auf die Vakuumhaube 9518 ausgeübt werden, wodurch die Vakuumhaube 9518 an einer Position fixiert werden kann.

Die externe Befestigungsvorrichtung kann beispielsweise ein Haken oder ein Seil sein, welches durch die Ausnehmung 990 geführt wird.

Auf diese Weise kann die Vakuumhaubenvorrichtung 988 beispielsweise vertikal zur Bodenfläche fixiert werden und an ein Werkstück 952 angelegt werden, bevor die Vakuumbeaufschlagung aktiviert wird.

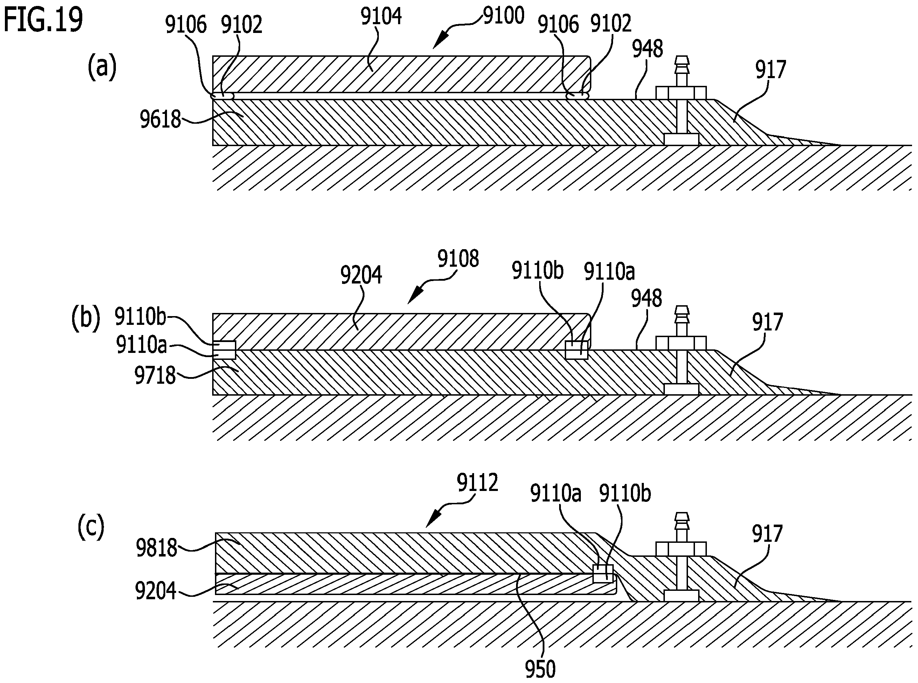

Bei einer siebten Ausführungsform einer erfindungsgemäßen Vakuumhaubenvorrichtung 9100 (Figur 19a) mit einer Vakuumhaube 9618 ist es vorgesehen, dass über eine Verbindungseinrichtung mit mindestens einem Verbindungselement 9102 mindestens eine Zusatzlage 9104 mit der Oberseite 948 der Vakuumhaube 9618 lösbar verbindbar ist.

Die Zusatzlage 9104 kann beispielsweise die thermische Isolierungslage 980, die Verstärkungsstruktur 970 sein oder eine Flusshilfe für Harz sein.

Das Verbindungselement 9102 ist an der Oberseite 948 der Vakuumhaube 9618 angeordnet und mit der Oberseite 948 fest verbunden. Beispielsweise ist das Verbindungselement 9102 durch einen Klebstoff mit der Oberseite 948 stoffschlüssig verbunden.

Die Zusatzlage 9104 weist ihrerseits ebenfalls ein mir ihr fest verbundenes Verbindungselement 9106 auf, welches mit dem Verbindungselement 9102 der Vakuumhaube 9618 lösbar verbindbar ist.

Das Verbindungselement 9102 stellt insbesondere ein Gegenstück zu dem Verbindungselement 9106 dar. Beispielsweise sind die Verbindungselemente 9102, 9106 als Klettverbindung ausgeführt. In diesem Fall stellt das Verbindungselement 9102 das Gegenstück eines Klettverschlusses zu dem des Verbindungselements 9106 dar. Die Verbindungselemente 9102, 9106 können alternativ als Druckknopfverbindung ausgeführt sein. In diesem Fall weist das Verbindungselement 9102 einen Druckknopf auf und das Verbindungselement 9106 sein Gegenstück (oder umgekehrt).

Es kann vorgesehen sein, dass eine lösbare Verbindung zwischen der Zusatzlage 9204 und der Oberseite 948 über mehrere Verbindungselemente 104, 106 hergestellt wird.

Die Zusatzlage 9104 ist insbesondere biegeflexibel ausgebildet.

Bei einer achten Ausführungsform einer erfindungsgemäßen Vakuumhaubenvorrichtung 9108 (Figur 19b) mit einer Vakuumhaube 9718 ist es vorgesehen, dass die Verbindungseinrichtung mindestens ein Paar von Permanentmagneten 9110a, 9110b umfasst, über welches eine Zusatzlage 9204 mit der Oberseite 948 der Vakuumhaube 9718 lösbar verbunden werden kann.

Das Paar von Permanentmagneten umfasst einen ersten Permanentmagneten 9110a und einen gegenpoligen zweiten Permanentmagneten 9110b. Die Permanentmagneten 9110a, 9110b ziehen sich daher gegenseitig an.

Der erste Permanentmagnet 9110a ist an der Oberseite 948 angeordnet und mit der Oberseite 948 fest verbunden. Er kann zusätzlich zumindest teilweise in das Strukturmaterial 917 der Vakuumhaube 9718 eingebettet sein.

Die Zusatzlage 9204 umfasst den zweiten Permanentmagneten 9110b, welcher fest mit der Zusatzlage 9204 verbunden ist. Er kann zusätzlich zumindest teilweise in das Material der Zusatzlage 9204 eingebettet sein. Der zweite Permanentmagnet 9110b ist insbesondere an einer Außenseite der Zusatzlage 9204 angeordnet. Der zweite Permanentmagnet 9110b ist insbesondere derart angeordnet, dass er an den ersten Permanentmagneten 9110a an der Oberseite 948 der Vakuumhaubenvorrichtung 9718 angenähert werden kann, sodass eine hinreichend starke Anziehung zwischen den Permanentmagneten 9110a, 9110b erfolgt, um die Zusatzlage 9204 mit der Oberseite 948 lösbar zu verbinden.

Auf diese Weise kann eine lösbare Verbindung durch magnetische Kräfte zwischen der Zusatzlage 9204 und der Oberseite 948 der Vakuumhaube 9718 hergestellt werden.

Es kann vorgesehen sein, dass eine lösbare Verbindung zwischen der Zusatzlage 9204 und der Oberseite 948 über mehrere Paare von Permanentmagneten 9110a, 9110b hergestellt wird.

Bei einer neunten Ausführungsform einer erfindungsgemäßen Vakuumhaubenvorrichtung 9112 (Figur 19c) mit einer Vakuumhaube 9818 ist mindestens ein erster Permanentmagnet 9110a an der Unterseite 950 der Vakuumhaube 9818 angeordnet und mit der Unterseite 950 fest verbunden. Er kann zusätzlich zumindest teilweise in das Strukturmaterial 917 der Vakuumhaube 9818 eingebettet sein.

Auf diese Weise kann analog zu der vorherigen Ausführungsform eine lösbare Verbindung der Zusatzlage 9204 mit der Unterseite 950 der Vakuumhaube 9818 hergestellt werden.

Es kann vorgesehen sein, dass mehrere Zusatzlagen 9104, 9204 über Verbindungselemente 9102, 9106 und/oder Paare von Permanentmagneten 9110a, 9110b mit der Vakuumhaube 9618, 9718, 9818 verbunden werden können.

Die Merkmale der vorstehend erläuterten Ausführungsformen 1 bis 9 können sowohl in beliebigen Kombinationen als auch in Alleinstellung verwendet werden.

Erfindungsgemäß wird eine Vakuumhaubenvorrichtung 910 mit einer Vakuumhaube 918 bereitgestellt, bei welcher durch Vakuumbeaufschlagung ein konstanter Abstand zwischen der Vakuumhaube 918 und dem Werkstück 952 hergestellt werden kann. Da die Vakuumhaubenvorrichtung 910 biegeflexibel ausgebildet ist, kann die Vakuumhaubenvorrichtung 910 auch an Werkstücken 952 mit gekrümmter Seite 960 eingesetzt werden.

Die Vakuumhaubenvorrichtung 910 kann beispielsweise zur Durchführung eines Reparaturverfahrens an einem Werkstück 952 eingesetzt werden. Das Werkstück 952 ist zum Beispiel beschädigtes ein Faserverbundwerkstoff-Bauteil mit einem Reparaturbereich. Das Reparaturverfahren kann analog zu dem im Zusammenhang mit der Induktionsheizvorrichtung 10 beschriebenen Reparaturverfahren ausgeführt werden, wobei die Erwärmung des Reparaturbereichs über eine externe Heizvorrichtung erfolgt.

Eine Vakuumbeaufschlagung zwischen der Unterseite 950 der Vakuumhaube 918 und der Seite 960 des Werkstücks 952 ist insbesondere auch dann möglich, wenn die Unterseite 950 nur in teilweisem Kontakt mit der Seite 960 steht. Dieser Fall tritt beispielsweise auf, wenn die Vakuumhaube 918 durch ein zwischen der Unterseite 950 und der Seite 960 angeordnetes Objekt von der Seite 960 des Werkstücks 952 weggedrückt wird. In dem entstehenden Hohlraum zwischen der Seite 960 und der Unterseite 950 ist eine Unterdruckbeaufschlagung möglich, sofern, bezogen auf das Zentrum der Vakuumhaube 918, konzentrisch angeordnete Randbereiche existieren, in welchen die Unterseite 950 die Seite 960 gasdicht kontaktiert.

Eine Ausführungsform der Vakuumhaube 9118 weist die Verstärkungsstruktur 970 auf. Hierdurch wird die Formstabilität der Vakuumhaube 9118 erhöht. Hierdurch kann eine Falten- bzw. Wellenbildung der Oberseite 948 und der Unterseite 950 der Vakuumhaube 9118 beim Auflegen der Vakuumhaube 9118 auf die Seite 960 des Werkstücks 952 vermieden werden.

Eine Ausführungsform der Vakuumhaube 9218 weist eine Kanalstruktur 974 an der Unterseite 950 auf. Hierdurch kann Luft schneller aus dem Zwischenraum zwischen der Seite 960 und der Unterseite 950 abgepumpt werden und damit die Unterdruckbeaufschlagung effektiver durchgeführt werden.

Eine Ausführungsform der Vakuumhaube 9318 weist die thermische Isolierungslage 980 auf. Dies führt zu einer reduzierten Wärmeabstrahlung über die Oberseite 948. Hierdurch kann zum Beispiel die Wärmeabstrahlung eines heißen Reparaturmaterials an der Unterseite 950 der Vakuumhaube 9318 reduziert werden, da weniger Wärme über die Oberseite 948 abgestrahlt werden kann. Hierdurch kann die Homogenität der Temperaturverteilung an der Unterseite 950 verbessert werden.

Bei einer Ausführungsform weist die Vakuumhaube 9418 mindestens einen Sensor 984 auf, welcher an der Unterseite 950 der Vakuumhaube 9418 angeordnet ist und mit welchem Messwerte an der Unterseite 950 während des Betriebs der Vakuumhaubenvorrichtung erfasst werden können. Hierdurch ist es möglich, mit einem geeigneten Steuergerät während des Betriebs der Vakuumhaubenvorrichtung 982 beispielsweise den Druck und/oder die Temperatur an dem Werkstück 952 zu steuern und/oder zu regeln.

Eine Ausführungsform der Vakuumhaube 9518 umfasst eine Fixierungseinrichtung mit einer Ausnehmung 990. An der Ausnehmung 990 kann die Vakuumhaube 9518 an einer vorgesehenen Stelle fixiert werden. Es kann beispielsweise ein Haken oder ein Seil durch die Ausnehmung 90 geführt werden. Hierdurch kann das Anlegen der Vakuumhaube 9518 an die Seite 960 des Werkstücks 952 erleichtert werden. Dies ist insbesondere der Fall, wenn die Vakuumhaube 9518 in vertikaler Ausrichtung zum Boden an die Seite 960 des Werkstücks 952 angelegt werden soll. Hierdurch kann ein Abrutschen der Vakuumhaube 9518 von der Seite 960 des Werkstücks 952 verhindert werden, bevor die Unterdruckbeaufschlagung aktiviert wird.

Bei einer Ausführungsform der Vakuumhaube 9618, 9718, 9818 kann mindestens eine Zusatzlage 9104, 9204 mit der Vakuumhaube 9618, 9718, 9818 lösbar verbunden werden. Die Zusatzlage 9104, 9204 kann beispielsweise die thermische Isolierungslage 980, die Verstärkungsstruktur 970 oder eine Flusshilfe für Harz sein. Hierdurch kann die Vakuumhaube 9618, 9718, 9818 flexibel und auf einfache Weise um Bestandteile erweitert bzw. reduziert werden. Die Ausstattung der Vakuumhaube 9618, 9718, 9818 kann flexibel an die individuellen Erfordernisse angepasst werden.

### Bezugszeichenliste

- 10: Induktionsheizvorrichtung
- 12: Spulenlage
- 14: Spuleneinrichtung
- 16: Träger
- 17: Strukturmaterial
- 18: Vakuumhaube
- 20: Hochfrequenzlitze
- 22: Umhüllung
- 24: Hochfrequenzquelleneinrichtung
- 26a: Anschluss
- 26b: Anschluss
- 28: Anschluss
- 30: Anschluss
- 32: Spiralförmige Wicklungen
- 34: Reihen
- 36: Spalten
- 38: Windungen
- 40: Ausgangsstelle
- 42a: Spiralförmige Wicklung
- 42b: Spiralförmige Wicklung
- 44a: Spiralförmige Wicklung
- 44b: Spiralförmige Wicklung
- 46: Erste Seite
- 48: Oberseite
- 50: Unterseite
- 52: Werkstück
- 53: Kanaleinrichtung
- 54: Zufuhrkanal
- 56: Verteiler
- 58: Anschluss
- 60: Seite
- 62: Reparaturbereich
- 64: Reparaturstück
- 66: Suszeptor
- 68: Induktionsheizvorrichtung
- 70: Verstärkungsstruktur
- 72: Induktionsheizvorrichtung
- 74: Kanalstruktur
- 76: Wandungselement
- 78: Induktionsheizvorrichtung
- 80: Thermische Isolierungslage
- 82: Induktionsheizvorrichtung
- 84: Sensor
- 86: Zuleitung
- 88: Induktionsheizvorrichtung
- 90: Ausnehmung
- 92: Randelement
- 94: Berandung
- 96: Innenseite
- 98: Außenseite
- 100: Induktionsheizvorrichtung
- 102: Verbindungselement
- 104: Zusatzlage
- 106: Verbindungselement
- 108: Induktionsheizvorrichtung
- 110a: Erster Permanentmagnet
- 110b: Zweiter Permanentmagnet
- 112: Induktionsheizvorrichtung
- 118: Vakuumhaube
- 174: Kanalstruktur
- 176: Wandungselement
- 204: Zusatzlage
- 218: Vakuumhaube

- 274: Kanalstruktur
- 276: Wandungselement
- 318: Vakuumhaube
- 374: Kanalstruktur
- 376: Wandungselement
- 418: Vakuumhaube
- 474: Kanalstruktur
- 476: Wandungselement
- 518: Vakuumhaube
- 618: Vakuumhaube
- 718: Vakuumhaube
- 818: Vakuumhaube
- 910: Vakuumhaubenvorrichtung
- 917: Strukturmaterial
- 918: Vakuumhaube
- 948: Oberseite
- 950: Unterseite
- 952: Werkstück
- 953: Kanaleinrichtung
- 954: Zufuhrkanal
- 956: Verteiler
- 958: Anschluss
- 960: Seite
- 968: Vakuumhaubenvorrichtung
- 970: Verstärkungsstruktur
- 972: Vakuumhaubenvorrichtung
- 974: Kanalstruktur
- 976: Wandungselement
- 978: Vakuumhaubenvorrichtung
- 980: Thermische Isolierungslage
- 982: Vakuumhaubenvorrichtung
- 984: Sensor
- 986: Zuleitung
- 988: Vakuumhaubenvorrichtung
- 990: Ausnehmung
- 992: Randelement
- 994: Berandung
- 996: Innenseite
- 998: Außenseite
- 9100: Vakuumhaubenvorrichtung
- 9102: Verbindungselement
- 9104: Zusatzlage
- 9106: Verbindungselement
- 9108: Vakuumhaubenvorrichtung
- 9110a: Erster Permanentmagnet
- 9110b: Zweiter Permanentmagnet
- 9112: Vakuumhaubenvorrichtung
- 9118: Vakuumhaube
- 9174: Kanalstruktur
- 9176: Wandungselement
- 9204: Zusatzlage
- 9218: Vakuumhaube
- 9274: Kanalstruktur
- 9276: Wandungselement
- 9318: Vakuumhaube
- 9374: Kanalstruktur
- 9376: Wandungselement
- 9418: Vakuumhaube
- 9474: Kanalstruktur
- 9476: Wandungselement
- 9518: Vakuumhaube
- 9618: Vakuumhaube
- 9718: Vakuumhaube
- 9818: Vakuumhaube

## Patentansprüche

1. Induktionsheizvorrichtung, umfassend mindestens eine Spulenlage (12) mit einer Spuleneinrichtung (14) und einem Träger (16), an welchem die Spuleneinrichtung (14) angeordnet ist, wobei die mindestens eine Spulenlage (12) biegeflexibel ausgebildet ist, und wobei die mindestens eine Spulenlage (12) in das Strukturmaterial (17) einer Vakuumhaube (18; 118; 218; 318; 418; 518; 618; 718; 818) eingebettet ist und die Vakuumhaube (18; 118; 218; 318; 418; 518; 618; 718; 818) mit der mindestens einen Spulenlage (12) biegeflexibel ausgebildet ist, **dadurch gekennzeichnet, dass** die Vakuumhaube (18; 118; 218; 318; 418; 518; 618; 718; 818) eine Verstärkungsstruktur (70) aufweist, welche in das Strukturmaterial (17) der Vakuumhaube (18; 118; 218; 318; 418; 518; 618; 718; 818) eingebettet ist, und dass die Verstärkungsstruktur (70) aus einer Faserstruktur hergestellt ist.

2. Induktionsheizvorrichtung nach Anspruch 1, **dadurch gekennzeichnet, dass** die mindestens eine Spulenlage (12) von dem Strukturmaterial (17) der Vakuumhaube (18; 118; 218; 318; 418; 518; 618; 718; 818) umgeben ist.

3. Induktionsheizvorrichtung nach einem der vorangehenden Ansprüche, **dadurch gekennzeichnet, dass** die Spuleneinrichtung (14) eine Mehrzahl von spiralförmigen Wicklungen (32) umfasst, dass die spiralförmigen Wicklungen (32) in Reihen (34) und/oder Spalten (36) angeordnet sind, und insbesondere dass die spiralförmigen Wicklungen (32) so ausgebildet sind, dass bei Stromdurchfluss der spiralförmigen Wicklungen (32) eine Stromrichtung in benachbarten Randwicklungsabschnitten von in einer Reihe (34) oder Spalte (36) benachbarten spiralförmigen Wicklungen (32) mindestens näherungsweise gleich ist.

4. Induktionsheizvorrichtung nach einem der vorangehenden Ansprüche, **dadurch gekennzeichnet, dass** der Träger (16) durch eine Faserstruktur und/oder durch eine Maschenstruktur gebildet ist, dass die Spuleneinrichtung (14) über einen oder mehrere Haltefäden an dem Träger (16) gehalten ist, und insbesondere dass die Spuleneinrichtung (14) mit dem Träger (16) vernäht ist.

5. Induktionsheizvorrichtung nach einem der vorangehenden Ansprüche, **dadurch gekennzeichnet, dass** die Vakuumhaube (18; 118; 218; 318; 418; 518; 618; 718; 818) eine Unterseite (50) aufweist, welche im Betrieb der Induktionsheizvorrichtung einem Werkstück (52) zugewandt ist, dass die Vakuumhaube (18; 118; 218; 318; 418; 518; 618; 718; 818) eine Kanaleinrichtung (53) mit mindestens einem Zufuhrkanal (54) aufweist, und dass über eine Unterdruckbeaufschlagung des mindestens einen Zufuhrkanals (54) ein Unterdruckbereich zwischen der Unterseite (50) und dem Werkstück (52) herstellbar ist und/oder das Werkstück (52) über den mindestens einen Zufuhrkanal (54) mit einem Material infiltrierbar ist, und insbesondere
dass die Vakuumhaube (18; 118; 218; 318; 418; 518; 618; 718; 818) mindestens einen Anschluss (58) aufweist, welcher mit dem mindestens einen Zufuhrkanal (54) fluidwirksam verbunden ist, oder
dass die Vakuumhaube (18; 118; 218; 318; 418; 518; 618; 718; 818) mindestens einen Verteiler (56) aufweist, und insbesondere dass der mindestens eine Zufuhrkanal (54) in den mindestens einen Verteiler (56) mündet, oder
dass die Kanaleinrichtung (53) eine Kanalstruktur (74; 174; 274; 374; 474) mit mindestens einem Kanal an der Unterseite (50) der Vakuumhaube (18; 118; 218; 318; 418; 518; 618; 718; 818) umfasst, welcher mit einer Öffnung zu der Unterseite (50) hin offen ist, und insbesondere dass der mindestens eine Kanal der Kanalstruktur (74; 174; 274; 374; 474) mit dem mindestens einen Zufuhrkanal (54) fluidwirksam verbunden ist.

6. Induktionsheizvorrichtung nach Anspruch 5, **dadurch gekennzeichnet, dass** eine Summe von Querschnittsflächen der Öffnungen aller Kanäle der Kanalstruktur (74; 174; 274; 374; 474) an der Unterseite (50) mindestens 30 % der Gesamtfläche der Unterseite (50) beträgt.

7. Induktionsheizvorrichtung nach Anspruch 5 oder 6, **dadurch gekennzeichnet, dass** die Kanäle der Kanalstruktur (74; 174; 274; 374; 474) gleichmäßig über die Unterseite (50) angeordnet sind, und insbesondere dass in einem Flächenbereich der Unterseite (50), welcher 25 % der Gesamtfläche der Unterseite (50) umfasst, die Summe der Querschnittsflächen der Öffnungen der Kanäle der Kanalstruktur (74; 174; 274; 374; 474), welche innerhalb des Flächenbereichs liegen, mindestens 10 % und höchstens 40 % der Summe der Querschnittsflächen der Öffnungen aller Kanäle der Kanalstruktur (74; 174; 274; 374; 474) beträgt.

8. Induktionsheizvorrichtung nach einem der vorangehenden Ansprüche, **dadurch gekennzeichnet, dass** die Vakuumhaube (18; 118; 218; 318; 418; 518; 618; 718; 818) mindestens eine thermische Isolierungslage (80) aufweist, welche in das Strukturmaterial (17) der Vakuumhaube (18; 118; 218; 318; 418; 518; 618; 718; 818) eingebettet ist, und insbesondere dass die mindestens eine Spulenlage (12) zwischen der thermischen Isolierungslage (80) und der Unterseite (50) der Vakuumhaube (18; 118; 218; 318; 418; 518; 618; 718; 818) angeordnet ist.

9. Induktionsheizvorrichtung nach einem der vorangehenden Ansprüche, **dadurch gekennzeichnet, dass** der Vakuumhaube (18; 118; 218; 318; 418; 518; 618; 718; 818) mindestens ein Sensor (84) zugeordnet ist.

10. Induktionsheizvorrichtung nach einem der vorangehenden Ansprüche, **dadurch gekennzeichnet, dass** die Vakuumhaube (18; 118; 218; 318; 418; 518; 618; 718; 818) eine Fixierungseinrichtung mit mindestens einer Lasche und mindestens einer Ausnehmung (90) umfasst, und insbesondere
dass die mindestens eine Lasche mit der Vakuumhaube (18; 118; 218; 318; 418; 518; 618; 718; 818) einstückig verbunden ist.

11. Induktionsheizvorrichtung nach einem der vorangehenden Ansprüche, **dadurch gekennzeichnet, dass** Vakuumhaube (18; 118; 218; 318; 418; 518; 618; 718; 818) aus einem gieß- und/oder spritzfähigen Strukturmaterial (17) hergestellt ist.

12. Induktionsheizvorrichtung nach einem der vorangehenden Ansprüche, **dadurch gekennzeichnet, dass** das Strukturmaterial (17) der Vakuumhaube (18; 118; 218; 318; 418; 518; 618; 718; 818) ein Silikonmaterial ist.

13. Induktionsheizvorrichtung nach einem der vorangehenden Ansprüche, **gekennzeichnet durch** mindestens eine Zusatzlage (104, 204), welche über eine Verbindungseinrichtung mit der Vakuumhaube (18; 118; 218; 318; 418; 518; 618; 718; 818) lösbar verbunden ist, und welche insbesondere biegeflexibel ausgebildet ist, und insbesondere
dass die Verbindungseinrichtung mindestens einen Magneten (110a, 110b) und/oder mindestens eine Klettverbindung (102, 106) umfasst.

## Claims

1. Induction heating apparatus, comprising at least one coil layer (12) having a coil device (14) and a carrier (16), on which carrier the coil device (14) is arranged, wherein the at least one coil layer (12) is of flexurally flexible configuration, and wherein the at least one coil layer (12) is embedded in the structural material (17) of a vacuum hood (18; 118; 218; 318; 418; 518; 618; 718; 818), and wherein the vacuum hood (18; 118; 218; 318; 418; 518; 618; 718; 818) having the at least one coil layer (12) is of flexurally flexible configuration, **characterized in that** the vacuum hood (18; 118; 218; 318; 418; 518; 618; 718; 818) comprises a reinforcing structure (70) which is embedded in the structural material (17) of the vacuum hood (18; 118; 218; 318; 418; 518; 618; 718; 818), and **in that** the reinforcing structure (70) is made of a fibre structure.

2. Induction heating apparatus in accordance with claim 1, **characterized in that** the at least one coil layer (12) is surrounded by the structural material (17) of the vacuum hood (18; 118; 218; 318; 418; 518; 618; 718; 818).

3. Induction heating apparatus in accordance any one of the preceding claims, **characterized in that** the coil device (14) comprises a plurality of spiral-shaped windings (32), and **in that** the spiral-shaped windings (32) are arranged in rows (34) and/or columns (36), and in particular **in that** the spiral-shaped windings (32) are configured such that when an electrical current is passed through the spiral-shaped windings (32), a direction of current is at least approximately the same in adjacent peripheral winding sections of spiral-shaped windings (32) adjacent in a row (34) or column (36).

4. Induction heating apparatus in accordance with any one of the preceding claims, **characterized in that** the carrier (16) is formed by a fibre structure and/or by a mesh structure, and **in that** the coil device (14) is held to the carrier (16) via one or more holding threads, and in particular **in that** the coil device (14) is sewed together with the carrier (16).

5. Induction heating apparatus in accordance with any one of the preceding claims, **characterized in that** the vacuum hood (18; 118; 218; 318; 418; 518; 618; 718; 818) has an underside (50) which, in operation of the induction heating apparatus, faces towards a workpiece (52), and **in that** the vacuum hood (18; 118; 218; 318; 418; 518; 618; 718; 818) comprises a channel device (53) comprising at least one feed channel (54), and **in that**, by applying a negative pressure to the at least one feed channel (54), a negative pressure region is creatable between the underside (50) and the workpiece (52) and/or the workpiece (52) is infiltratable with a material via the at least one feed channel (54), and in particular
**in that** the vacuum hood (18; 118; 218; 318; 418; 518; 618; 718; 818) comprises at least one port (58) which is operatively connected to the at least one feed channel (54) for fluid communication therewith, or
**in that** the vacuum hood (18; 118; 218; 318; 418; 518; 618; 718; 818) comprises at least one distributor (56), and in particular **in that** the at least one feed channel (54) opens into the at least one distributor (56), or
**in that** the channel device (53) comprises a channel structure (74; 174; 274; 374; 474) having at least one channel at the underside (50) of the vacuum hood (18; 118; 218; 318; 418; 518; 618; 718; 818), which channel is, at an opening thereof, open towards the underside (50), and in particular **in that** the at least one channel of the channel structure (74; 174; 274; 374; 474) is operatively connected to the at least one feed channel (54) for fluid communication therewith.

6. Induction heating apparatus in accordance with claim 5, **characterized in that** a sum of cross-sectional areas of the openings of all channels of the channel structure (74; 174; 274; 374; 474) at the underside (50) is at least 30 % of the total area of the underside (50).

7. Induction heating apparatus in accordance with claim 5 or 6, **characterized in that** the channels of the channel structure (74; 174; 274; 374; 474) are arranged uniformly across the underside (50), and in particular **in that** in a portion of area of the underside (50) that encompasses 25 % of the total area of the underside (50), the sum of the cross-sectional areas of the openings of the channels of the channel structure (74; 174; 274; 374; 474) that lie within said portion of area is at least 10 % and at most 40 % of the sum of the cross-sectional areas of the openings of all channels of the channel structure (74; 174; 274; 374; 474).

8. Induction heating apparatus in accordance with any one of the preceding claims, **characterized in that** the vacuum hood (18; 118; 218; 318; 418; 518; 618; 718; 818) comprises at least one thermal insulation layer (80) which is embedded in the structural material (17) of the vacuum hood (18; 118; 218; 318; 418; 518; 618; 718; 818), and in particular **in that** the at least one coil layer (12) is arranged between the thermal insulation layer (80) and the underside (50) of the vacuum hood (18; 118; 218; 318; 418; 518; 618; 718; 818).

9. Induction heating apparatus in accordance with any one of the preceding claims, **characterized in that** the vacuum hood (18; 118; 218; 318; 418; 518; 618; 718; 818) has at least one sensor (84) associated therewith.

10. Induction heating apparatus in accordance with any one of the preceding claims, **characterized in that** the vacuum hood (18; 118; 218; 318; 418; 518; 618; 718; 818) comprises a fixing device having at least one lug and at least one opening (90), and in particular
**in that** the at least one lug is connected in one piece to the vacuum hood (18; 118; 218; 318; 418; 518; 618; 718; 818).

11. Induction heating apparatus in accordance with any one of the preceding claims, **characterized in that** the vacuum hood (18; 118; 218; 318; 418; 518; 618; 718; 818) is made of a castable and/or injection mouldable structural material (17).

12. Induction heating apparatus in accordance with any one of the preceding claims, **characterized in that** the structural material (17) of the vacuum hood (18; 118; 218; 318; 418; 518; 618; 718; 818) is a silicone material.

13. Induction heating apparatus in accordance with any one of the preceding claims, **characterized by** at least one additional layer (104, 204) which is releasably connected to the vacuum hood (18; 118; 218; 318; 418; 518; 618; 718; 818) via a connecting device and which is in particular of flexurally flexible configuration, and in particular
in that the connecting device comprises at least one magnet (110a, 110b) and/or at least one hook-and-loop connection (102, 106).

## Revendications

1. Dispositif de chauffage par induction, comprenant au moins une couche de bobines (12) avec un système de bobines (14) et un support (16) sur lequel le système de bobines (14) est disposé, dans lequel l'au moins une couche de bobines (12) est réalisée de manière flexible à la flexion, et dans lequel l'au moins une couche de bobines (12) est intégrée dans le matériau structurel (17) d'un capot d'aspitation sous vide (18 ; 118 ; 218 ; 318 ; 418 ; 518 ; 618 ; 718 ; 818) et le capot d'aspiration sous vide (18 ; 118 ; 218 ; 318 ; 418 ; 518 ; 618 ; 718 ; 818) avec l'au moins une couche de bobines (12) est réalisé de manière flexible à la flexion, **caractérisé en ce que** le capot d'aspiration sous vide (18 ; 118 ; 218 ; 318 ; 418 ; 518 ; 618 ; 718 ; 818) présente une structure de renfort (70), qui est intégrée dans le matériau structurel (17) du capot d'aspiration sous vide (18 ; 118 ; 218 ; 318 ; 418 ; 518 ; 618 ; 718 ; 818) et que la structure de renfort (70) est fabriquée à partir d'une structure fibreuse.

2. Dispositif de chauffage par induction selon la revendication 1, **caractérisé en ce que** l'au moins une couche de bobines (12) est entourée par le matériau structurel (17) du capot d'aspiration sous vide (18 ; 118 ; 218 ; 318 ; 418 ; 518 ; 618 ; 718 ; 818).

3. Dispositif de chauffage par induction selon l'une quelconque des revendications précédentes, **caractérisé en ce que** le système de bobines (14) comprend une multitude d'enroulements hélicoïdaux (32), que les enroulements hélicoïdaux (32) sont disposés en rangées (34) et/ou en colonnes (36), et en particulier que les enroulements hélicoïdaux (32) sont réalisés de telle sorte qu'en cas de passage de courant à travers les enroulements hélicoïdaux (32), un sens de courant dans des sections adjacentes d'enroulement périphérique d'enroulements hélicoïdaux (32) adjacents dans une rangée (34) ou une colonne (36) est au moins approximativement identique.

4. Dispositif de chauffage par induction selon l'une quelconque des revendications précédentes, **caractérisé en ce que** le support (16) est formé par une structure fibreuse et/ou par une structure maillée, que le système de bobines (14) est maintenu sur le support (16) par l'intermédiaire d'un ou plusieurs fils de retenue, et en particulier que le système de bobines (14) est cousu au support (16).

5. Dispositif de chauffage par induction selon l'une quelconque des revendications précédentes, **caractérisé en ce que** le capot d'aspiration sous vide (18 ; 118 ; 218 ; 318 ; 418 ; 518 ; 618 ; 718 ; 818) présente une face inférieure (50) qui, lors du fonctionnement du dispositif de chauffage par induction, est tournée vers une pièce à usiner (52), que le capot d'aspiration sous vide (18 ; 118 ; 218 ; 318 ; 418 ; 518 ; 618 ; 718 ; 818) présente un système de canaux (53) avec au moins un canal d'alimentation (54), et qu'une zone de dépression peut être établie entre la face inférieure (50) et la pièce à usiner (52) en soumettant l'au moins un canal d'alimentation (54) à l'action d'une dépression, et/ou que la pièce à usiner (52) peut être infiltrée par un matériau par l'intermédiaire de l'au moins un canal d'alimentation (54), et en particulier
que le capot d'aspiration sous vide (18 ; 118 ; 218 ; 318 ; 418 ; 518 ; 618 ; 718 ; 818) présente au moins un raccord (58), qui est relié par liaison fluidique à l'au moins un canal d'alimentation (54), ou
que le capot d'aspiration sous vide (18 ; 118 ; 218 ; 318 ; 418 ; 518 ; 618 ; 718 ; 818) présente au moins un distributeur (56) et en particulier que l'au moins un canal d'alimentation (54) débouche dans l'au moins un distributeur (56), ou
que le système de canaux (53) comprend une structure de canaux (74 ; 174 ; 274 ; 374 ; 474) avec au moins un canal sur la face inférieure (50) du capot d'aspiration sous vide (18 ; 118 ; 218 ; 318 ; 418 ; 518 ; 618 ; 718 ; 818), lequel est ouvert par une ouverture vers la face inférieure (50), et en particulier que l'au moins un canal de la structure de canaux (74 ; 174 ; 274 ; 374 ; 474) est relié par liaison fluidique à l'au moins un canal d'alimentation (54).

6. Dispositif de chauffage par induction selon la revendication 5, **caractérisé en ce qu'**une somme de surfaces de section transversale des ouvertures de tous les canaux de la structure de canaux (74 ; 174 ; 274 ; 374 ; 474) sur la face inférieure (50) est d'au moins 30 % de la surface totale de la face inférieure (50).

7. Dispositif de chauffage par induction selon la revendication 5 ou 6, **caractérisé en ce que** les canaux de la structure de canaux (74 ; 174 ; 274 ; 374 ; 474) sont disposés uniformément sur la face inférieure (50), et en particulier **en ce que** dans une zone de surface de la face inférieure (50), laquelle comprend 25 % de la surface totale de la face inférieure (50), la somme des surfaces de section transversale des ouvertures des canaux de la structure de canaux (74 ; 174 ; 274 ; 374 ; 474), situées à l'intérieur de la zone de surface, est d'au moins 10 % et au maximum de 40 % de la somme des surfaces de section transversale des ouvertures de tous les canaux de la structure de canaux (74 ; 174 ; 274 ; 374 ; 474).

8. Dispositif de chauffage par induction selon l'une quelconque des revendications précédentes, **caractérisé en ce que** le capot d'aspiration sous vide (18 ; 118 ; 218 ; 318 ; 418 ; 518 ; 618 ; 718 ; 818) présente au moins une couche d'isolation thermique (80) qui est intégrée dans le matériau structurel (17) du capot d'aspiration sous vide (18 ; 118 ; 218 ; 318 ; 418 ; 518 ; 618 ; 718 ; 818), et en particulier **en ce que** l'au moins une couche de bobines (12) est disposée entre la couche d'isolation thermique (80) et la face inférieure (50) du capot d'aspiration sous vide (18 ; 118 ; 218 ; 318 ; 418 ; 518 ; 618 ; 718 ; 818).

9. Dispositif de chauffage par induction selon l'une quelconque des revendications précédentes, **caractérisé en ce qu'**au moins un capteur (84) est associé au capot d'aspiration sous vide (18 ; 118 ; 218 ; 318 ; 418 ; 518 ; 618 ; 718 ; 818).

10. Dispositif de chauffage par induction selon l'une quelconque des revendications précédentes, **caractérisé en ce que** le capot d'aspiration sous vide (18 ; 118 ; 218 ; 318 ; 418 ; 518 ; 618 ; 718 ; 818) comprend un dispositif de fixation avec au moins une languette et au moins un évidement (90), et en particulier
**que** l'au moins une languette est reliée en une seule pièce au capot d'aspiration sous vide (18 ; 118 ; 218 ; 318 ; 418 ; 518 ; 618 ; 718 ; 818).

11. Dispositif de chauffage par induction selon l'une quelconque des revendications précédentes, **caractérisé en ce que** le capot d'aspiration sous vide (18 ; 118 ; 218 ; 318 ; 418 ; 518 ; 618 ; 718 ; 818) est fabriqué à partir d'un matériau structurel coulable et/ou pulvérisable (17).

12. Dispositif de chauffage par induction selon l'une quelconque des revendications précédentes, **caractérisé en ce que** le matériau structurel (17) du capot d'aspiration sous vide (18 ; 118 ; 218 ; 318 ; 418 ; 518 ; 618 ; 718 ; 818) est un matériau en silicone.

13. Dispositif de chauffage par induction selon l'une quelconque des revendications précédentes, **caractérisé par** au moins une couche supplémentaire (104, 204), qui est reliée de manière amovible au capot d'aspiration sous vide (18 ; 118 ; 218 ; 318 ; 418 ; 518 ; 618 ; 718 ; 818) par l'intermédiaire d'un système de liaison, et qui est notamment réalisée de manière flexible à la flexion, et en particulier
que le système de liaison comprend au moins un aimant (110a, 110b) et/ou au moins un système de liaison auto-agrippant (102, 106).
